# EUROPEAN PATENT SPECIFICATION

(11) **EP 0 583 516 B1**
(45) Date of publication and mention of the grant of the patent: **17.07.1996**
(21) Application number: 92307219.3
(22) Date of filing: 06.08.1992
(51) Int. Cl.: F16D 69/04

(54) **Process and apparatus for manufacturing clutch friction plate**
Verfahren und Vorrichtung zum Herstellen von Kupplungsreibscheiben
Procédé et dispositif pour produire des plaques de friction

(43) Date of publication of application: 23.02.1994
(73) Proprietor: KABUSHIKI KAISHA F.C.C., Hamamatsu-shi Shizuoka-ken (JP)
(72) Inventor: Miyaishi, Kazuomi, Hamamatsu-shi, Shizuoka-Ken (JP); Agata, Akihiro, Hamamatsu-shi, Shizuoka-Ken (JP); Shimoi, Hiroji, Hamamatsu-shi, Shizuoka-Ken (JP)
(74) Representative: Piesold, Alexander J.

(56) References cited:
- EP-A- 0 353 481
- WO-A-88/02685
- GB-A- 2 190 968

## Description

The present invention relates to a process for manufacturing a friction plate for a clutch, and an apparatus for use in the process.

In manufacturing a friction plate for a clutch, a procedure has been conventionally employed which comprises subjecting a sheet of a friction article to a cutting operation to provide a cut portion of predetermined size, punching the cut portion to provide an annular friction article, and adhering the annular friction article to an annular core. A method and apparatus for manufacturing such an item is disclosed in EP-A-0353481 (Automotive Products). The annular friction article is then subjected to a machining or to a shaping with a metal mold to provide a large number of radially extending oil grooves on the annular article.

However, if a punching is employed, there is encountered a problem that the yield rate of the friction article is as low as 20 to 40 %, resulting in an inferior economy.

When the oil grooves are made by machining, the depth of the groove tends to become shallow in order to avoid a damage to the core. As a result, oil fails to drain in practice, bringing about a reduction in durability due to degradation in cooling performance, a generation of a dragging noise, a lowering in operation feeling and the like. When the oil groove is made by shaping, a mold for each of friction plates having different sizes must be provided, which is extremely uneconomical.

According to the present invention, there is provided a process for manufacturing a clutch friction plate, comprising bonding a plurality of friction material segments to an annular core in a circumferential configuration, the friction material segments being bonded to the core with spaces between adjacent segments which define oil grooves.

In a first embodiment, the process comprises the steps of:
positioning the core such that the bonding surface, which has an adhesive applied thereto, faces upwards;
unwinding a friction material tape to a position above said core by an amount corresponding to a friction material segment;
cutting said friction material tape to provide said friction material segment, and pressing and adhering said friction material segment to said bonding surface of said core; and
unwinding said friction material tape by an amount corresponding to a next friction material segment, and rotating said core in preparation for adhering of the next said friction material segment.

With the above-described process, the friction material segments are cut out from the friction material tape and adhered one by one to the core. Therefore, it is possible to increase the yield rate of the friction material and to produce a friction plate with an oil groove of the same depth as the thickness of the friction material provided between the adjacent friction material segments. Further, this process can easily be applied to the manufacture of friction plates of various sizes and therefore, it is very economical, conjointly with the increase in the yield rate.

In a second preferred embodiment, the process comprises the steps of:
positioning said core such that said bonding surface, which has an adhesive applied thereto, faces upwards;
unwinding a friction material tape having a width corresponding to that of areas equally divided circumferentially on said core to a position above said core, in an amount corresponding to a plurality of friction material segments located in one of said areas;
subjecting said friction material tape to multiple punching to provide a plurality of the friction material segments, and pressing and adhering said friction material segments to said bonding surface of said core; and
unwinding said friction material tape, and rotating said core in preparation for a subsequent adhering of subsequent friction material segments.

With such manufacturing process, the friction material tape having a particular width is subjected to the multiple punching to provide the plurality of the friction material segments which are then adhered. Therefore, it is possible to increase the yield rate of the friction material and to produce a friction plate with an oil groove of the same depth as the thickness of the friction material between the adjacent friction material segments. Further, this process can easily be applied to the manufacture of friction plates having various sizes and therefore, it is very economical, conjointly with the increase in the yield rate. Yet further, the plurality of friction material segments are adhered in one adhering operation, thereby reducing the number of bonding steps and improving a productivity of the friction plate.

In a third preferred embodiment, the process comprises the steps of:
feeding a friction material tape to a position between a receiving roller and a cutting roller having a large number of cutting blades disposed radially at equal distances on an outer peripheral surface of the cutting roller,
cutting out and retaining each of the friction material segments sequentially from said friction material tape by cooperation of two adjacent cutting blades of the cutting roller and said receiving roller, and
pushing out each individual retained friction material segment from a position between the cutting blades and pressing and adhering the friction material segment onto said bonding surface of said core while rotating the core synchronously with said cutting roller around an axis perpendicular to the axis of the cutting roller.

With the manufacturing process, the friction material segments are cut off sequentially from the friction material tape and adhered one by one to the core. Therefore, it is possible to increase the yield rate of the friction material and to produce a friction plate with an oil groove of the same depth as the thickness of the friction material provided between the adjacent friction material segments. Further, this process can easily be applied to the manufacture of friction plates of various sizes and therefore, it is economical, conjointly with the increase in the yield rate. Yet further, the adhesion of the friction material segments is conducted while rotating the core. Therefore, the adhering operation can efficiently be conducted, and the manufacturing cost for the friction plate can be reduced.

In a fourth preferred embodiment, the process comprises the steps of:
positioning said core such that said bonding surface, having an adhesive applied thereto, faces upwards;
unwinding a plurality of friction material tapes each by an amount corresponding to one of the friction material segments at a plurality of unwinding positions arranged above said core at equal distances in a circumferential direction of said core;
cutting each of said friction material tapes to provide said friction material segment, and pressing and adhering said friction material segment to said bonding surface of said core; and
unwinding each of said friction material tapes by an amount corresponding to a subsequent friction material segment, and rotating said core in preparation for adhering of said subsequent friction material segment.

With this manufacturing process, friction material segments are provided from the plurality of friction material tapes and adhered to the core. Therefore, it is possible to increase the yield rate of friction material and to produce a friction plate with an oil groove of the same depth as the thickness of the friction material provided between the adjacent friction material segments. Further, this process can easily be applied to the manufacture of friction plates of various different sizes and therefore, it is very economical, conjointly with the increase in the yield rate. yet further, the plurality of friction material segments are bonded to the core in one set of pressing and adhering steps and therefore, the operation time for bonding the friction material segments can be shortened and in its turn, the productivity for the clutch friction plate can be improved.

The invention also provides apparatus for carrying out this process.

In a fifth preferred embodiment, the apparatus comprises:
a support on which said core is to be positioned with said bonding surface, having an adhesive applied thereto, facing upwards and which is arranged to be intermittently rotated to position it in preparation for adhering of each friction material segment;
an unwinding mechanism for intermittently unwinding a friction material tape to a position above said support by an amount corresponding to each of the friction material segments; and
a liftable pressing mechanism for cutting and pressing said friction material tape and adhering the resulting friction material segment to said core.

With such apparatus, a friction plate can efficiently be made by reliably repeating the operations of unwinding the friction material tape, subjecting the friction material tape to the cutting so as to provide one friction material segment and pressing and adhering the resulting friction material segment to the core.

In a sixth preferred embodiment, the apparatus comprises:
a support on which said core is to be positioned with the bonding surface, having an adhesive applied thereto, facing upwards and which is arranged to be intermittently rotated to position it in preparation for adhering of said friction material segments;
an unwinding mechanism for unwinding a friction material tape to a position above said core, said tape having a width corresponding to that of the friction material segments which are to be located on areas of said core which are equally divided circumferentially; and
a liftable pressing mechanism for subjecting said friction material tape to multiple punching to provide a plurality of the friction material segments, and for pressing and adhering the resulting friction material segments to said core.

With such manufacturing apparatus, a friction plate can efficiently be manufactured by reliably repeating the operations of unwinding the friction material tape, subjecting the friction material tape to the multiple punching so as to simultaneously provide a plurality of friction material segments and adhering the resulting friction material segments to the core.

In a seventh preferred embodiment, the apparatus comprises:
a feed mechanism for feeding a friction material tape to a position between a cutting roller and a receiving roller which are rotated with their outer peripheral surfaces opposed to each other,
a support disposed adjacent said cutting roller to rotate synchronously with the cutting roller, for supporting said core with the bonding surface opposed to the outer peripheral surface of said cutting roller, said cutting roller including a plurality of cutting blades disposed radially at equal distances on the outer peripheral surface thereof, two adjacent cutting blades of the cutting blades being capable of cutting off the friction material segment from the friction material tape and retaining it by cooperation with said receiving roller, and
a pressing member disposed between two adjacent cutting blades for reciprocal movement between a retracted position in which said pressing member permits the cutting and retaining of said friction material segment by the cutting blades and an advanced position in which said pressing member pushes out said friction material segment from a position between the two cutting blades to press it against said bonding surface.

With this apparatus, it is possible to efficiently produce a friction plate by reliably cutting off and retaining the friction material segments and pressing and adhering the friction material segments to the core.

In an eighth preferred embodiment, the apparatus comprises:
a support on which said core is to be positioned with said bonding surface, having an adhesive applied thereto, facing upwards and which is arranged to be intermittently rotated in preparation for adhering of the friction material segments;
a plurality of unwinding mechanisms for intermittently unwinding a plurality of friction material tapes each by an amount corresponding to one friction material segment to a plurality of unwind positions arranged above said support at equal distances in a circumferential configuration of said core; and
a plurality of liftable pressing mechanisms for cutting said friction material tapes, and pressing and adhering said resulting friction material segments to said core.

With this manufacturing apparatus a friction plate for a clutch can efficiently be produced by reliably repeating the operations of unwinding the friction material tapes, subjecting the friction material tapes to the cutting to provide the friction material segments, and adhering the resulting friction material segments to the core.

Certain preferred embodiments of the invention will now be described by way of example only and with reference to the accompanying drawings, in which:
Figs. 1 to 3 illustrate a friction plate, wherein Fig. 1 is a plan view of the entire friction plate;
Figs. 2 and 3 are sectional views taken along lines II-II and III-III in Fig. 1, respectively;
Figs. 4 to 12 illustrate a first embodiment of the present invention, wherein

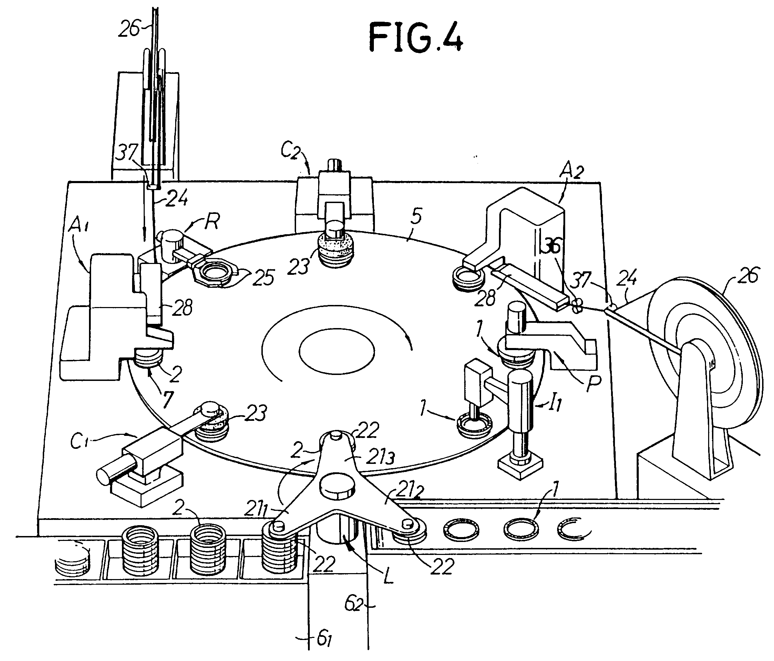

Fig. 4 is a perspective view of a manufacturing apparatus;

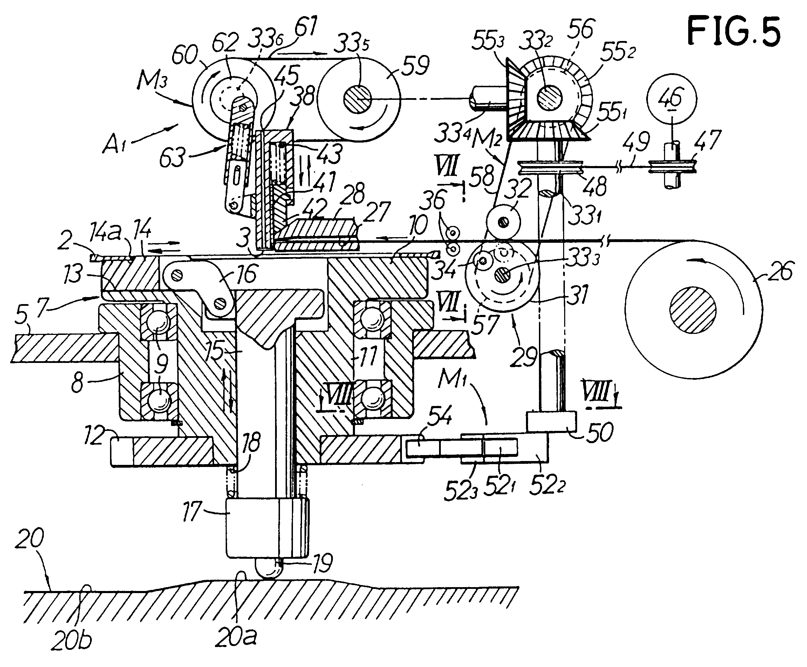

Fig. 5 is a longitudinal sectional side view of an adhering mechanism for adhering a friction material segment;

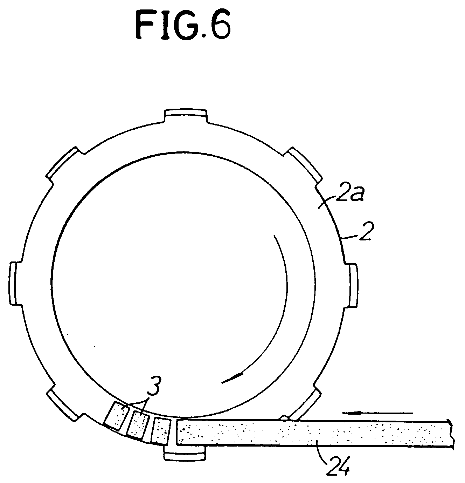

Fig. 6 is an illustration for explaining the operation of adhering friction material segments to a core;

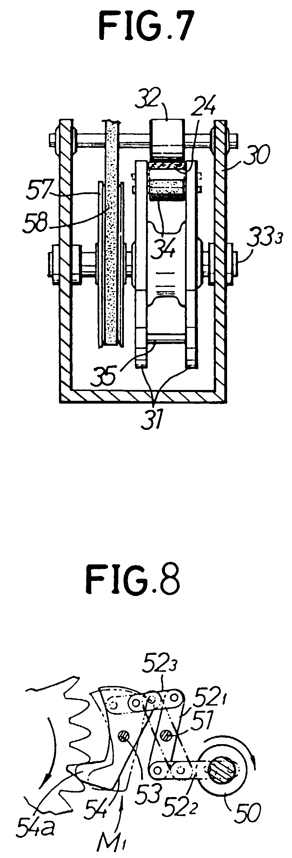

Figs. 7 and 8 are sectional views taken along line VII-VII and VIII-VIII in Fig. 5, respectively;
Figs. 9A to 9E are views for explaining the operation of a pressing member;

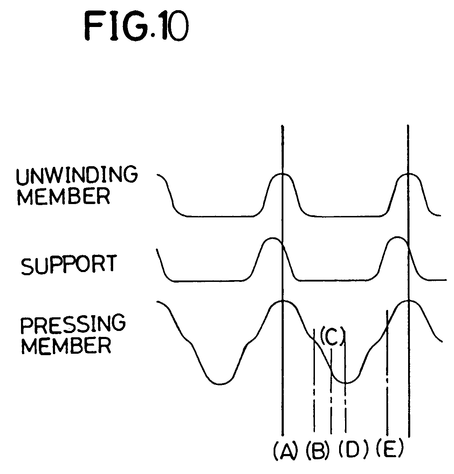

Fig. 10 is a timing chart;

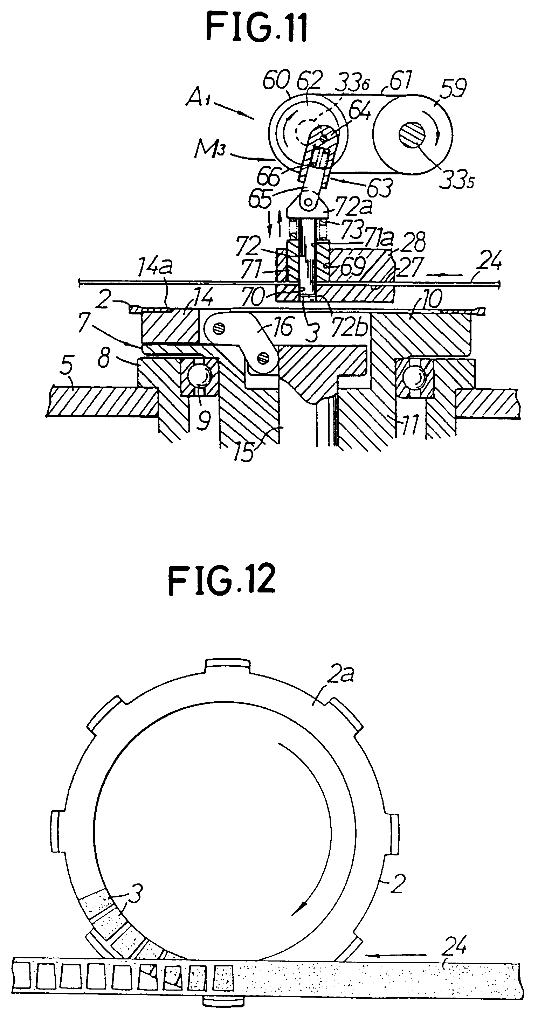

Fig. 11 is a longitudinal sectional side view of an essential portion of a modified adhering mechanism for adhering a friction material segment;
Fig. 12 is an illustration for explaining the operation of adhering friction material segments to a core by the modified adhering mechanism;

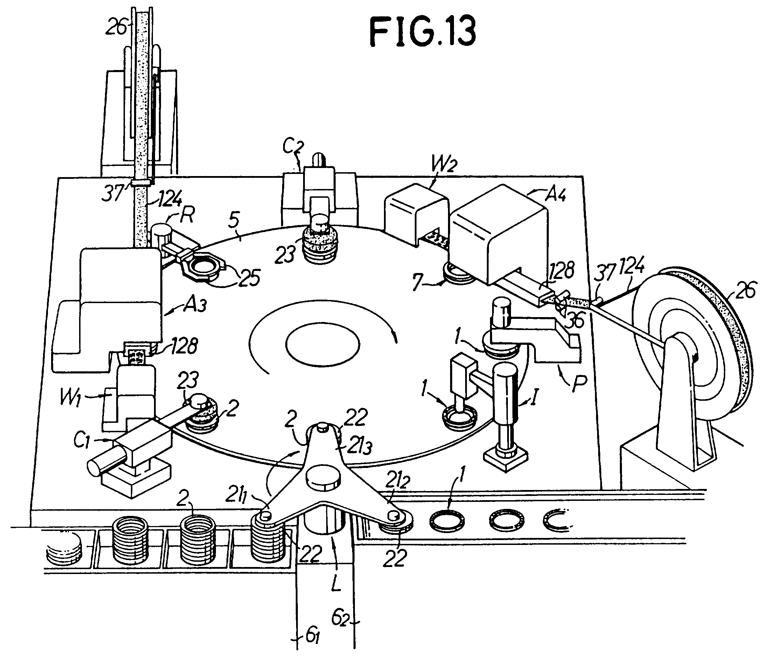

Figs. 13 to 17 illustrate a second embodiment of the present invention, wherein
Fig. 13 is a perspective view of a manufacturing apparatus of the second embodiment;

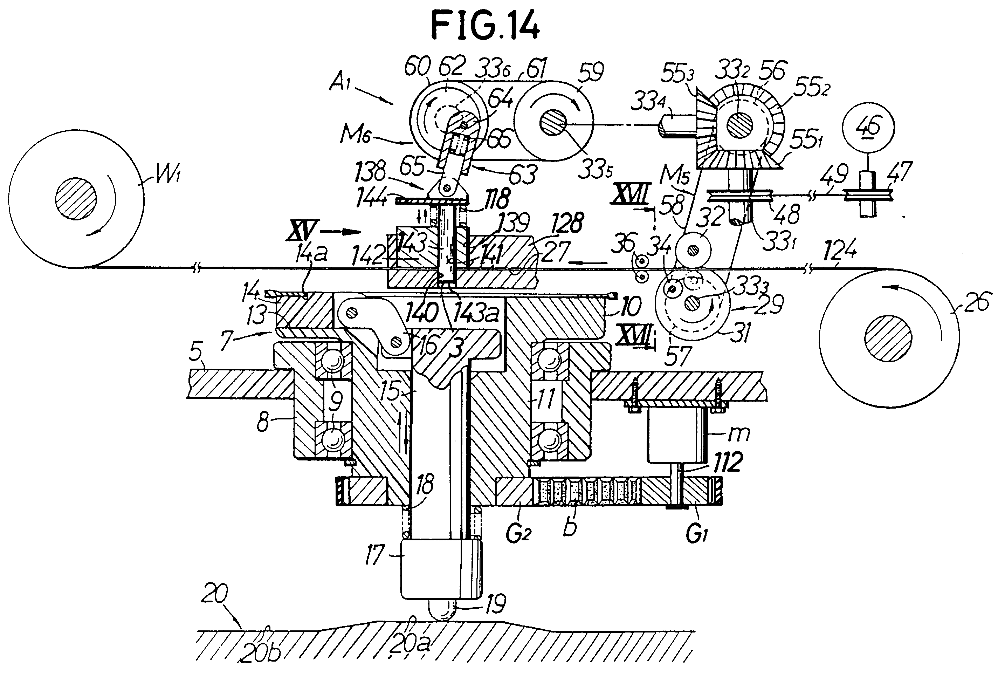

Fig. 14 is a longitudinal sectional side view of an adhering mechanism for adhering a friction material segment;

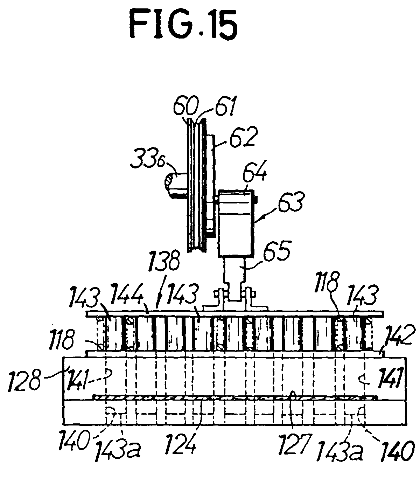

Fig. 15 is a view taken along an arrow XV in Fig. 14;

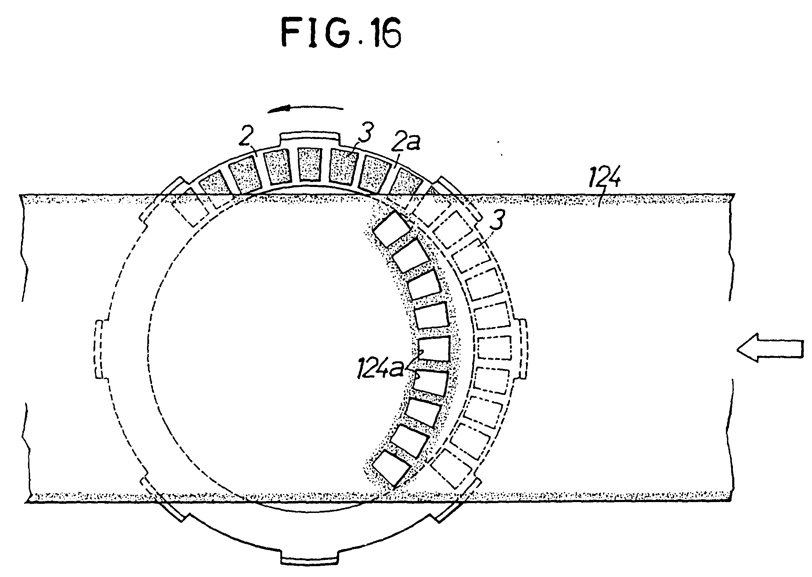

Fig. 16 is an illustration for explaining an operation of adhering friction material segments to a core;

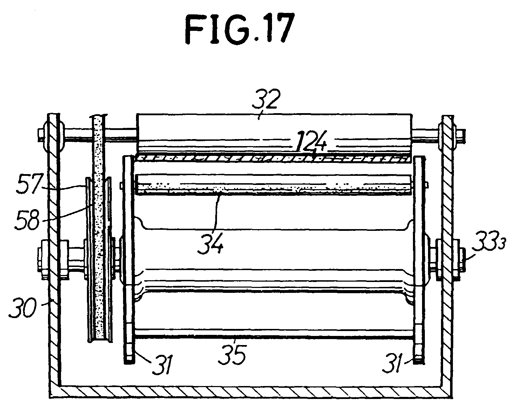

Fig. 17 is a sectional view taken along a line XVII-XVII in Fig. 14;

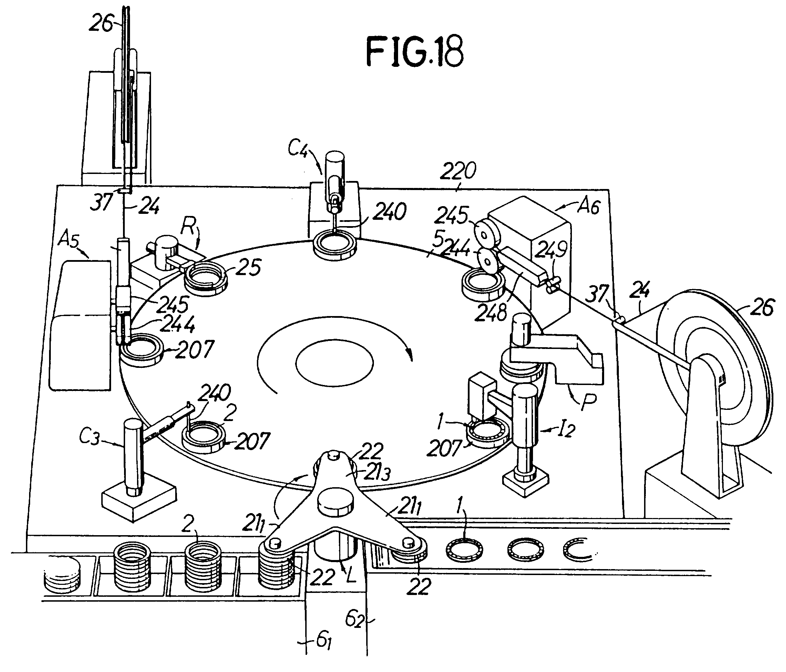

Figs. 18 to 25 illustrate a third embodiment of the present invention, wherein
Fig. 18 is a perspective view of a manufacturing apparatus of the third embodiment;

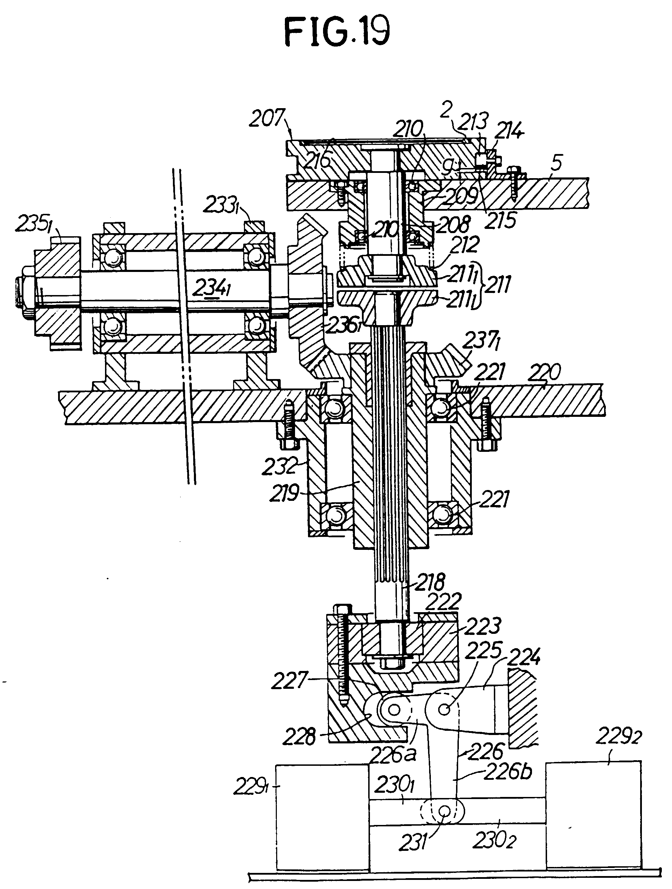

Fig. 19 is a longitudinal sectional side view of a core lifting/rotating mechanism;

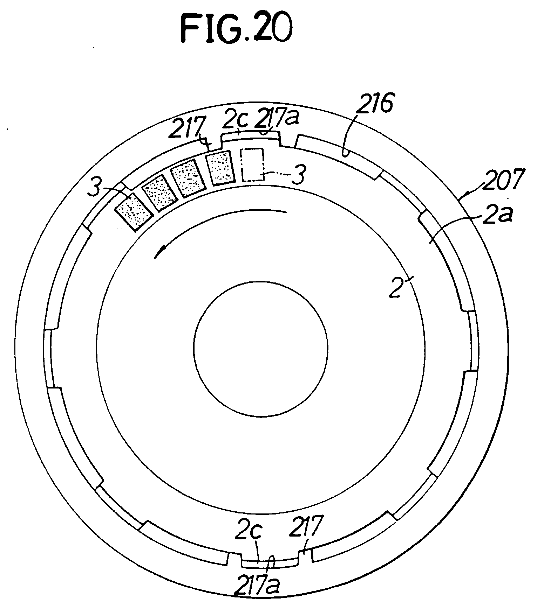

Fig. 20 is a plan view illustrating a relation between a support and a core;

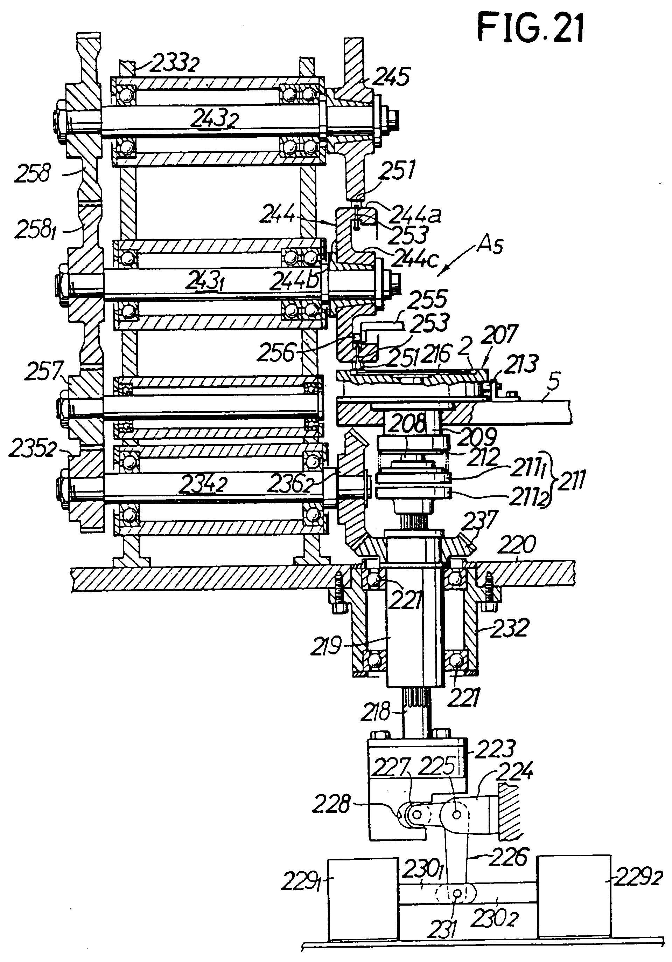

Fig.21 is a longitudinal sectional side view of a first adhering mechanism for adhering a friction material segment;

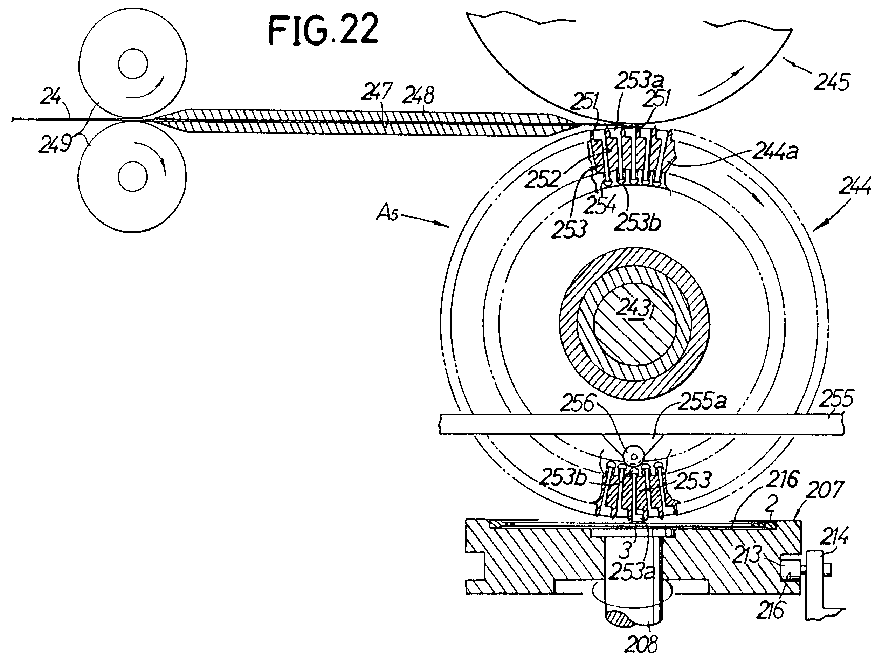

Fig. 22 is an enlarged view of an essential portion of the mechanism shown in Fig.21;

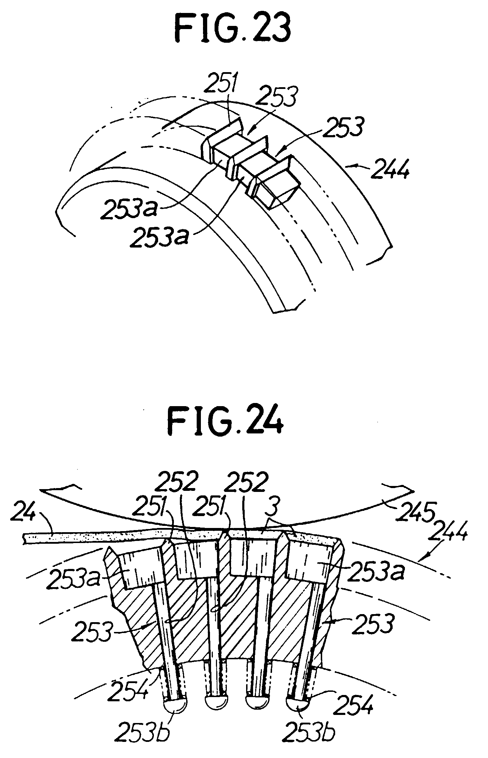

Fig. 23 is an enlarged view of an essential portion of a cutting roller;
Fig. 24 is a view for explaining the operation of cutting a friction material segment;

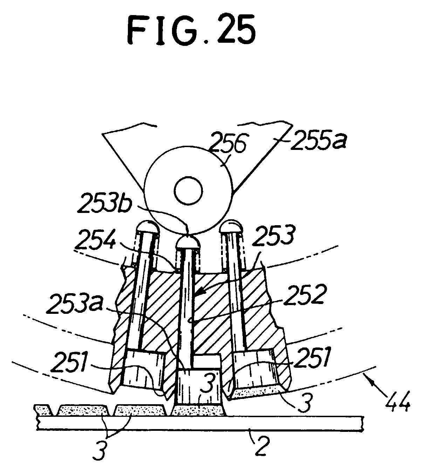

Fig. 25 is a view for explaining the operation of pressing/adhering a friction material segment;

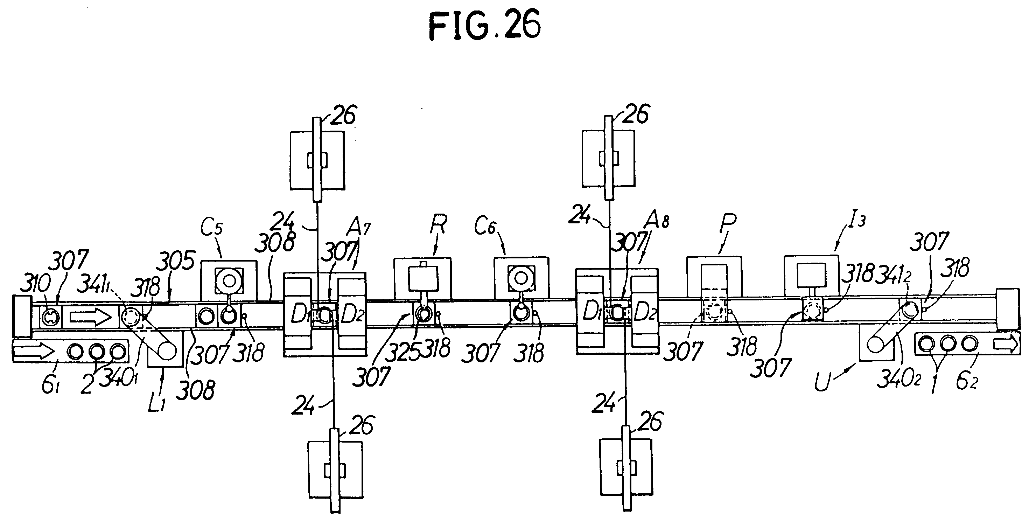

Fig. 26 to 29 illustrate a fourth embodiment of the present invention, wherein
Fig. 26 is a plan view of a manufacturing apparatus;

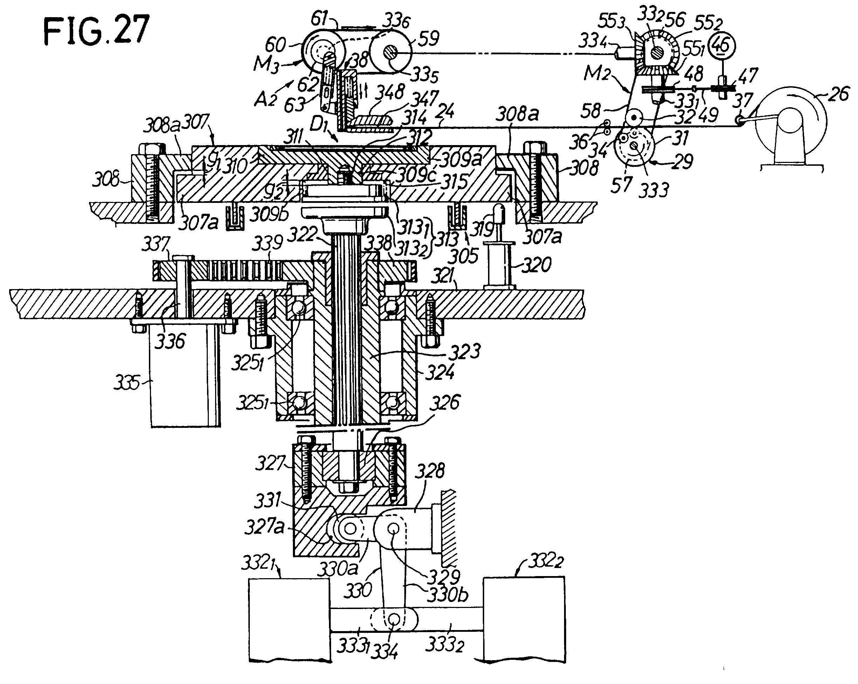

Fig. 27 is a longitudinal sectional side view of a first adhering mechanism for adhering a friction material segment;

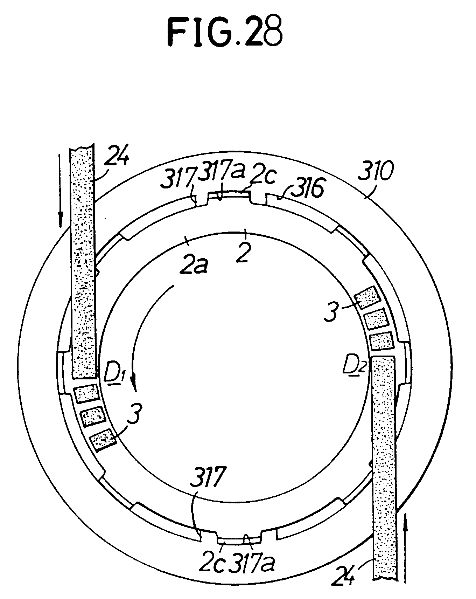

Fig. 28 is an illustration for explaining an operation of adhering friction material segments to a core; and

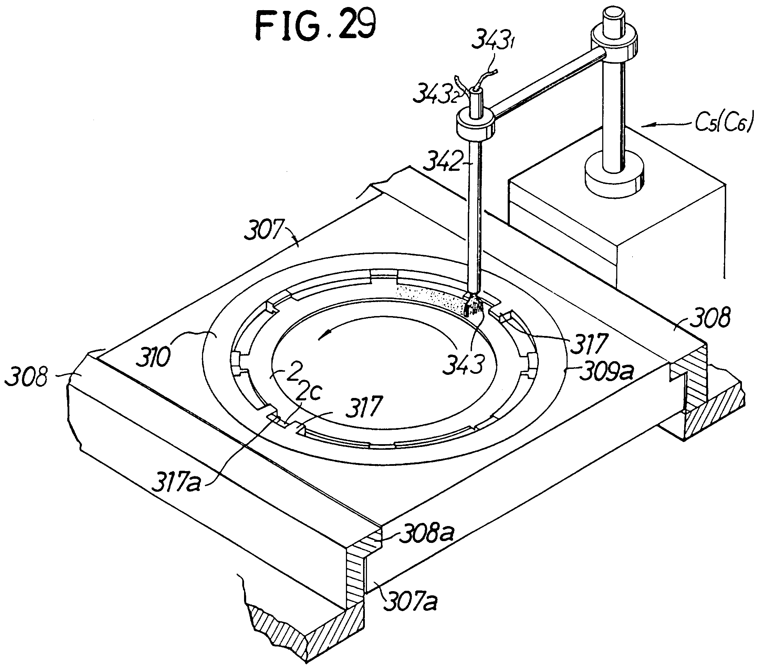

Fig. 29 is a perspective view of an adhesive applying mechanism.

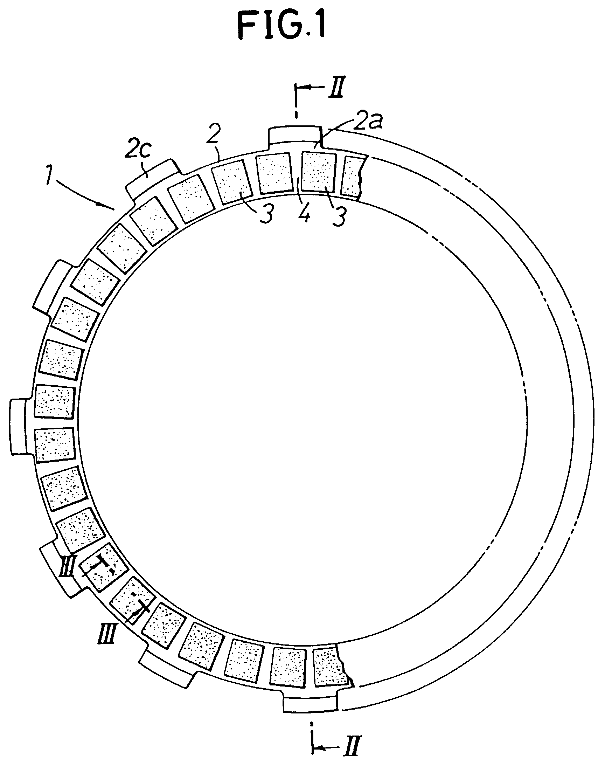

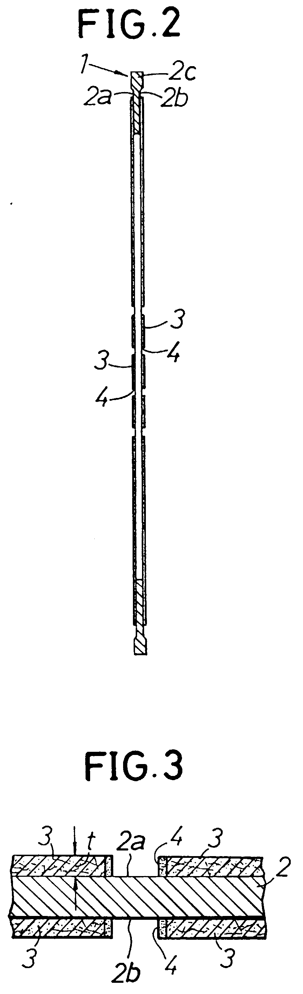

Figs. 1 to 3 illustrate a clutch friction plate 1. The friction plate 1 is comprised of an annular core 2 and a large number of friction material segments 3 adhered to opposite bonding surfaces 2a and 2b of the core 2 in the circumferential direction thereof. An oil groove 4 is formed between the adjacent friction material segments 3 and has a depth equal to the thickness of the friction material segment 3.

Fig. 4 illustrates an automatic manufacturing apparatus for manufacturing a friction plate 1 of the type described above according to a first embodiment of the present invention. The apparatus comprises a loading and unloading mechanism L for supplying a core and removing a friction plate, a first adhesive applying mechanism C₁, a first adhering mechanism A₁, a reversing mechanism R, a second adhesive applying mechanism C₂, a second adhering mechanism A₂, a pressing mechanism P and an inspecting mechanism I₁. These mechanisms are sequentially disposed around a turn table 5 at distances of 45°. The turn table 5 is intermittently rotatable for every 45° in a clockwise direction.

A first conveyer 6₁ for conveying cores and a second conveyer 6₂ for conveying friction plates, having the same preset transporting direction, are arranged in a tangential direction of the turn table 5 on opposite sides of the loading/unloading mechanism L.

The turn table 5 includes eight core-positioning supports 7 disposed near the outer periphery thereof for every 45° in a circumferential direction. The surroundings of each of the supports 7 are constructed in the following manner.

Referring also to Fig. 5, flanged cylindrical retainers 8 are secured to the turn table 5 at the periphery thereof for every 45° in the circumferential direction. The support 7 is rotatably supported on the cylindrical retainer 8 with a bearing 9 interposed therebetween. The support 7 is comprised of an annular rest plate 10 exposing an upper surface on the turn table 5, and a hollow cylinder with its lower end projecting through the retainer 8. A gear 12 is secured to an outer peripheral surface of the hollow cylinder 11 at its lower end for intermittently rotating the support 7.

A plurality of slide grooves 13 are formed in the upper surface of the rest plate 10 at distances in a circumferential direction to extend in the radial direction of the rest plate 10. A slider 14 is slidably received in each of the slide grooves 13. An operating rod 15 is slidably mounted inside the hollow cylinder 11 for vertical movement in a manner such that a tip end thereof is located just below the corresponding slider 14 at an upper vertical position. The tip end of the operating rod 15 and the corresponding slider 14 are interconnected through a link 16.

A spring 18 is compressed between a lower end face of the hollow cylinder 11 and an upper end face of an enlarged portion 17 of the operating rod 15 located below such lower end face. A sliding element 19 projects from a lower end face of the enlarged portion 17 and slides on an upper surface of an annular cam plate 20 which is disposed below the turn table 5 along an outer periphery thereof. The cam plate 20 includes raised portions 20a and level portions 20b which are skirts to the raised portion. Such level portions 20b are disposed to extend from an intermediate point between the first adhering mechanism A₁ and the reversing mechanism R to an intermediate point between the reversing mechanism R and the second adhesive applying mechanism C₂, and from an intermediate point between the inspecting mechanism I₁ and the loading/unloading mechanism L to an intermediate point between the loading/unloading mechanism L and the first adhesive applying mechanism C₁, respectively. The raised portion 20a is disposed between the level portions 20b.

In the upper vertical position of the operating rod 15 in which the sliding element 19 lies on the raised portion 20a of the cam plate 20, each slider 14 slides outwardly radially of the rest plate 10, so that an engage step 14a on an upper surface of the slider 14 is brought into engagement with an inner edge of the core 2 placed on the rest plate 10 thereby positioning the core 2. On the other hand, in a lower vertical position of the operating rod 15 in which the sliding element 19 lies on the level portion 20b of the cam plate 20, each slider 14 slides inwardly radially of the rest plate 10, so that the engage step 14a on the upper surface of the slider 14 is brought out of engagement with the inner edge of the core 2, thereby releasing the positioning of the core 2.

Referring again to Fig. 4, the loading/unloading mechanism L includes three, first, second and third rotatable octopus arms 21₁, 21₂ and 21₃ liftable and intermittently rota table for 120° in a clockwise direction as viewed in Fig. 4. Each of the rotatable arms 21₁, 21₂ and 21₃ is provided at its tip end with a collet chuck 22. When the collet chuck 22, for example, of the first rotatable arm 21₁ is located above a terminating end of the first conveyer 61 upon stoppage of the rotation of all the rotatable arms 21₁, 21₂ and 21₃, the collet chuck 22 of the second rotatable arm 21₂ is located above the support 7 of the turn table 5, while the collet chuck 22 of the third rotatable arm 21₃ is located above the starting end of the second conveyer 6₂.

The first and second adhesive applying mechanisms C₁ and C₂ have the same construction and each includes a disk-like silicone pad 23 for applying adhesive to the core 2. The silicone pad 23 is lowered at a position at which it has been retreated from the turn table 5, whereby the adhesive is applied to the disk-like silicone pad 23. Thereafter, the silicone pad 23 is lifted up, then advanced toward the turn table 5 and lowered, whereby the adhesive is applied to the core 2.

The first and second adhering mechanisms A₁ and A₂ have the same construction, such that friction material segments 3 are cut out one by one from a friction material tape 24 and pressed against and adhered to the bonding surfaces 2a and 2b of the core 2. The details of the mechanisms A₁ and A₂ will be described hereinafter.

The reversing mechanism R comprises a pair of liftable and rotatable hands 25. The reversing mechanism R functions, after completion of the bonding of the friction material segments 3 to one of the bonding surfaces 2a, to lift and reverse the core 2 by the hands 25, thereby turning the other bonding surface 2b up.

The pressing mechanism P is intended to apply a pressing force simultaneously to all the friction material segments 3 adhered to the opposite bonding surfaces 2a and 2b of the core 2 to insure the reliable adhesion of the friction material segments 3 to the opposite bonding surfaces 2a and 2b of the core 2.

The inspecting mechanism I₁ is adapted to photo-electrically detect whether or not a predetermined number of friction material segments 3 are adhered to the opposite bonding surfaces 2a and 2b of the core 2.

A procedure of manufacturing a friction plate 1 by the above-described apparatus will be described below.

Before the start of a manufacturing operation, cores 2 with one bonding surface 2a facing upwards are piled into a cylindrical configuration and transported on the first conveyor 61. The turn table 5 is at a stop. One support 7 is at the position for the loading/unloading mechanism L1 and the operating rod 15 is at the lower vertical position. Further, each of the rotatable arms 21₁, 21₂ and 21₃ is at its lifted position.

In the loading/unloading mechanism L, the rotatable arms 21₁, 21₂ and 21₃ are lowered, and the first rotatable arm 211 clamps a piece of core 2 horizontally by the collet chuck 22. Then, the rotatable arms 21₁, 21₂ and 21₃ are lifted and rotated for 120°. When the rotatable arms 21₁, 21₂ and 21₃ are lowered again, the first rotatable arm 211 releases the core 2 from the collet chuck 22, and the rotatable arms 21₁, 21₂ and 21₃ are lifted again. The first, second and third rotatable arms 21₁, 21₂ and 21₃ perform such motions sequentially, thereby placing the core 2, with its bonding surface 2a facing upwards, onto the rest plate 10 of the support 7.

The turn table 5 is turned for 45° to transfer the core 2 to the position of the first adhesive applying mechanism C₁. During the transfer, the operating rod 15 is moved to the upper vertical position by the cam plate 20 and hence, the core 2 is positioned on the rest plate 10 by each slider 14, and the adhesive is applied to the bonding surface 2a of the core 2 by the first adhesive applying mechanism C₁.

The turn table 5 is turned for 45° to transfer the core to the position of the first adhering mechanism A₁. Then, the friction material tape 24 is unwound or unrolled to a position above the core 2 in an amount corresponding to a piece of friction material segment 3 and subjected to a cutting to provide the friction material segment 3, which is then pressed and adhered to the bonding surface 2a of the core 2.

Thereafter, the friction material tape 24 is unwound in an amount corresponding to the next friction material segment 3, and the core 2 is rotated along with the support 7 for adhering such friction material segment 3.

The above-described unwinding, cutting, pressing and adhering and rotating operations are sequentially repeated to adhere a large number of friction material segments 3 one by one to the one bonding surface 2a, as shown in Fig. 6. The bonding operation for the friction material segments 3 will be described below in detail.

The turn table 5 is turned for 45° to transfer the core 2 to the position for the reversing mechanism R. During the transfer, the operating rod 15 is moved to the lower vertical position by the cam plate 20, so that each slide 14 releases the core. The core 2 is reversed by the reversing mechanism R to turn the other bonding surface 2b up.

The turn table 5 is turned for 45° to transfer the core to the position of the second adhesive applying mechanism C₂. During the transfer, the operating rod 15 is moved to the upper vertical position by the cam plate 20, so that the core 2 is positioned again on the rest plate 10 by each slider 14. Then, the adhesive is applied to another bonding surface 2b of the core 2 by the second adhesive applying mechanism C₂.

The turn table 5 is turned for 45° to transfer the core 2 to the position of the second adhering mechanism A₂, where a large number of friction material segments 3 are adhered to the bonding surface 2b of the core 2 in the same manner to provide a friction plate 1.

The turn table 5 is turned for 45° to transfer the friction plate 1 to the position for the pressing mechanism P, where a pressing force is applied to all the friction material segments 3 simultaneously to ensure the reliable bonding of the friction material segments 3 to the core 2.

The turn table 5 is turned for 45° to transfer the friction plate 1 to the position for the inspecting mechanism I₁, where mechanism I₁ inspects whether or not a predetermined number of friction material segments 3 are bonded to the core 2.

The turn table 5 is turned for 45° to transfer the friction plate 1 to the position for the loading/unloading mechanism L. During the transfer, the operating rod 15 is moved to the lower vertical position by the cam plate 20, so that each slider 14 releases the friction plate 1.

The loading/unloading mechanism L repeats a core supplying operation similar to that described above, seven times, upon every turning movement of the turn table 5 for 45° until the first plate 1 reaches the inspecting mechanism I₁, which is made from a core 2 being firstly supplied onto the support 7. A push-up mechanism is incorporated in the terminating end of the first conveyer 6₁ for maintaining the uppermost core 2 at the same level in order to supply the cores 2 one by one.

When the friction plate 1 has been transferred to the position for the loading/unloading mechanism L as described above, for example, the first rotatable arm 21₁ is located above the support 7. In the loading/unloading mechanism L, the rotatable arms 21₁, 21₂ and 21₃ are lowered, and the first rotatable arm 211 clamps the friction plate 1 on the turn table 5 horizontally by the collet chuck 22, while the second rotatable arm 21₂ clamps the friction plate 1 on the first transporting conveyer 61 horizontally by the collet chuck 22. Then, the rotatable arms 21₁, 21₂ and 21₃ are lifted and rotated for 120°. When the rotatable arms 21₁, 21₂ and 21₃ are lowered again, the first rotatable arm 21₁ releases the friction plate 1 from the collet chuck 22, while the core 2 is released from the collet chuck 22 of the second rotatable arm 21₂, and then, the rotatable arms 21₁, 21₂ and 21₃ are lifted again. Such operations are sequentially conducted, thereby placing the friction plate 1 onto the starting end of the second conveyer 6₂ and at the same time, placing the core 2 onto the support 7. The friction plate 1 transported by the second conveyer 6₂ is subjected to a drying treatment for drying the adhesive.

The manufacture of the friction plate 1 is automatically carried out in this manner.

The first and second adhering mechanisms A₁ and A₂ will be described below. Both the mechanisms A₁ and A₂ have the same construction, as described above and therefore, only the first adhering mechanism A₁ will be described.

Referring to Figs. 4 and 5, a reel 26 is disposed in the vicinity of the turn table 5 with the friction material wound therearound. The friction material tape 24 is produced by slitting a friction material sheet. A guide mechanism 28 is disposed above the support 7. A through hole 27 is provided in the guide mechanism 28 for permitting a tip end of the friction material tape 24 to pass through. The guide mechanism 28 guides the tip end of the friction material tape 24 to a position above the core 2 positioned on the support 7.

An unwinding mechanism 29 is disposed between the reel 26 and the guide mechanism 28 for intermittently unwinding the friction material tape 24 in an amount corresponding to a piece of friction material segment 3 to a position above the support 7 and thus above the core 2.

The unwinding mechanism 29 is constructed in the following manner:

As shown in Figs. 5 and 7, a third rotary shaft 33₃ is rotatably supported in a frame 30 below the friction material tape 24. A pair of disk-like guide plates 31 are secured to the third rotary shaft 33₃, the friction material tape 24 is guided between outer peripheries of the guide plates 31.

A press roller 32 is disposed just above the third rotary shaft 33₃ to come into rolling contact with the friction material tape 24. The axial length of the press roller 32 is set slightly shorter than the distance between the guide plates 31. A small diameter short columnar friction element 34 of a rubber material is non-rotatably disposed at a location offset from the axis of the third rotary shaft 33₃ between the guide plates 31. Reference numeral 35 is a spacer for the guide plates 31.

In the above-described construction, the friction element 34 circularly revolves about the third rotary shaft 33₃ below the friction material tape 24. Only when the friction element 34 is brought into close contact with the lower surface of the friction material tape 24, the friction material tape 24 is pulled out or unwound in the above-described manner by cooperation with the press roller 32. Reference numeral 36 designates a guide roller pair, and reference numeral 37 in Fig. 4 designates a tension roller.

A liftable pressing mechanism 38 is disposed in the vicinity of the guide mechanism 28 for cutting out the friction material segment 3 from the friction material tape 24 and pressing and adhering it to the core 2.

As clearly shown in Fig. 9A, the pressing mechanism 38 comprises a main body 39 which is liftably supported on a guide member (not shown). A lower end face of the main body 39 serves as a pressing face 39a. A downward hole 40 is provided in the main body 39 upstream of the pressing face 39a in an unwinding direction of the friction material tape 24. A cutting edge 41 adjacent the pressing face 39a and a stopper 42 superposed on and fixed to the cutting edge 41 are slidably received in the downward hole 40.

A spring 43 is compressed between an upper end face of the stopper 42 and a ceiling surface of the downward hole 40. A projection 42a on a side surface of the stopper 42 abuts against a lower edge of an opening 44 in the main body 39 when the spring 43 exhibits a resilient force before a cutting operation, thereby retaining an edge point 41a of the cutting edge 41 on substantially the same level as the pressing face 39a. A slant lower end face 42b of the stopper 42 is located above the edge point 41a. The end face 42b abuts against the slant surface 28a of the guide member 28 after the cutting edge 41 has cut the friction material tape 24, thereby preventing the cutting edge 41 from being further lowered.

A sucking hole 45 is provided in the main body 39 and opened at the pressing face 39a of the main body 39, and a vacuum source (not shown) is connected to the sucking hole 45. This ensures that a portion of the friction material tape 24 corresponding to the friction material segment 3 is brought into close contact with the pressing face 39a prior to the cutting.

A mechanism M₁ for intermittently rotating the support 7, a mechanism M₂ for operating the unwinding member 29 and a mechanism M₃ for lifting the pressing member 38 will be described below.

These mechanisms M₁, M₂ and M₃ are operated by an electric motor 46 which is a common power source. A driving shaft of the electric motor 46 is connected through a reduction unit (not shown) to a driving pulley 47 which is connected through a belt 49 to a follower pulley 48 secured to a first rotary shaft 33₁.

As clearly shown in Figs. 5 and 8, a disk member 50 is provided at a lower end of the first rotary shaft 33₁. A first link 52₁ is pivotally supported at its intermediate portion on a fixed support shaft 51 in the vicinity of the disk member 50. A feeding claw 54 is pivotally supported at its intermediate portion on a fixed support shaft 53 between the first link 52₁ and the gear 12 of the support 7. An end of the first link 52₁ is connected to a second link 522 which is connected to the disk member 50 at an eccentric location of the disk member 50, and an end opposite from a claw portion 54a in the feeding claw 54 is connected to the other end of the first link 52₁ by a third link 52₃. The number of teeth of the gear 12 is the same as the number of the friction material segments in the friction plate 1.

The first rotary shaft 33₁, the first, second and third links 52₁, 52₂ and 52₃, the feeding claw 54 and the gear 12 constitute the mechanism M₁ for intermittently rotating the support 7. A half rotation of the first rotary shaft 33₁ causes the feeding claw 54 to swing from an engaged position shown by a solid line in Fig. 8 in which it is in engagement with the gear 12 to a disengaged position shown by a dashed line, thereby rotating the support 7 for an angle substantially corresponding to one tooth of the gear 12, i.e., a sum of the width of one friction material segment 3 and the width of the groove 4 in the direction of rotation of the support 7. The remaining half rotation of the first rotary shaft 33₁ causes the feeding claw 54 to swing from the disengaged position shown by the dashed line to the engaged position shown by the solid line, whereby the feeding claw 54 is brought into engagement with the next tooth of the gear 12.

A first bevel gear 55₁ is secured to an upper end of the first rotary shaft 33₁, and a second bevel gear 55₂ is secured to a second rotary shaft 33₂ for meshing with the first bevel gear 55₁. A belt 58 is mounted between a pulley 56 secured to the second rotary shaft 33₃ and a pulley 57 secured to the third rotary shaft 33₃ of the unwinding member 29.

The second and third rotary shafts 33₂ and 33₃, the first and second bevel gears 55₁ and 55₂, the pulleys 56 and 57 and the belt 58 constitute the mechanism M₂ for operating the unwinding member 29.

A third bevel gear 55₃ is secured to a fourth rotary shaft 33₄ and meshed with the first bevel gear 55₁, and a belt 61 is mounted between a pulley 59 secured to a fifth rotary shaft 33₅ operatively connected to the fourth rotary shaft 33₄, and a pulley 60 secured to a sixth rotary shaft 33₆. A disk member 62 is provided at one end of the sixth rotary shaft 33₆, and an eccentric portion of the disk member 62 and the main body 39 of the pressing member 38 are interconnected through a link mechanism 63. As shown in Fig. 9A, the link mechanism 63 includes a cylindrical member 64 located adjacent the disk member 62 and having a slide bore 64a opened downwardly. A rod member 65 located adjacent the main body 39 is slidably received in the slide bore 64a and a spring is compressed between a ceiling surface of the slide bore 64a and an upper end face of the rod member 65. A stopper pin 68 is secured to the cylindrical member 64 and extends through an axially extending elongated hole 67 in the rod member 65. The stopper pin 68 is in engagement with an inner surface of the elongated hole 67 at its upper portion, except when the friction material segment 3 is pressed and adhered.

The fourth to sixth rotary shafts 33₄ to 33₆, the first and third bevel gears 55₁ and 55₃, the pulleys 59 and 60, the belt 61 and the link 63 constitute the mechanism M₃ for lifting the pressing member 38. The pressing member 38 performs one lifting movement by one rotation of the fifth rotary shaft 33₅ in a clockwise direction as viewed in Fig. 5.

The position of connection of the disk member 62 and the link mechanism 63 is determined in a manner such that the pressing member 38 is further urged even after the pressing face 39a is in contact with the bonding surface 2a of the core 2 with the friction material segment 3 interposed therebetween upon lowering of the pressing member 38.

The operation of the mechanism A₁ will be described below.

The core 2 is positioned and fixed on the upper surface of the rest 1 of the support 7.

Referring to Figs. 9A and 10(A), the friction material tape 24 is unwound by an amount corresponding to one friction material segment 3 by the unwinding member 29, and the pressing member 38 is at its lifted position.

In this condition, the feeding claw 54 in the mechanism M₁ for intermittently rotating the support 7 has already started the swinging movement from the disengaged position shown by the dashed line in Fig. 8 toward the gear 12. The friction element 34 of the unwinding member 29 is spaced apart from the lower surface of the friction material tape 24.

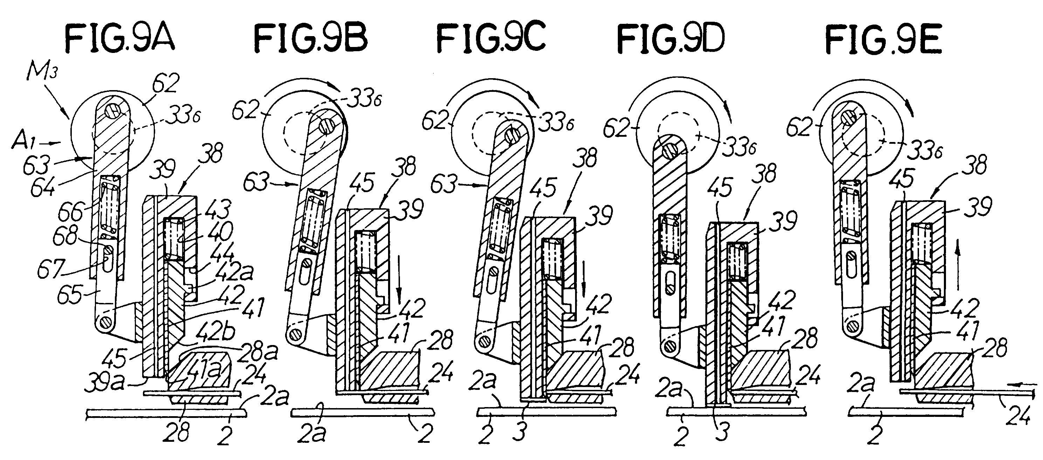

As shown in Figs. 9B and 10(B), when the sixth rotary shaft 33₆ is rotated clockwise, the pressing member 38 starts lowering. When the pressing face 39a abuts against a portion of the friction material tape 24 corresponding to the friction material segment 3, such portion is absorbed to the pressing face 39a by a sucking effect of the sucking hole 45.

As shown in Figs. 9C and 10(C), the friction material tape 24 is subjected to the cutting operation by the cutting edge 41 as a result of the subsequent lowering movement of the pressing member 38, and the resulting friction material segment 3 is held on the pressing face 39a of the pressing member 38.

As shown in Figs. 9D and 10(D), the pressing face 39a is placed onto the bonding surface 2a of the core 2 with the friction material segment 3 as a result of the subsequent lowering movement of the pressing member 38. Even after this placement, a force in a direction to lower the pressing member 38 is applied to the pressing member 38, but is absorbed by compression of the spring 66 of the link 63.

This enables a large pressing force to be provided, thereby reliably adhering the friction material segment 3 to the bonding surface 2a of the core 2.

As shown in Figs. 9E and 10(E), the pressing member 38 is returned to the lifted position as a result of a subsequent rotation of the sixth rotary shaft 33₆, and in the course of such upward movement, the feeding claw 54 in the mechanism M₁ for intermittently rotating the support 7 is brought into engagement with the gear 12 to provide a rotation of the support 7 by an amount corresponding to one tooth. Immediately after the start of the rotation of the support 7, the friction element 34 is put in frictional contact with the lower surface of the friction material tape 24 to unwind the friction material tape 24, which is consequently ready for the next adhesion operation.

Figs. 11 and 12 illustrate another embodiment of a friction material segment bonding mechanism. In this embodiment, the friction material segment 3 is cut out from the friction material tape 24 by utilization of a punching process.

More specifically, the guide member 28 is provided with an insertion hole 69 formed for receiving a tape retainer 71 above the through hole 27 through which the tip end of the friction material tape 24 is inserted, and a die hole 70 formed for receiving a punch die 72 below the through hole 27. The tape retainer 71 is slidably received in the insertion hole 69 and has a guide hole 71a aligned with the die hole 70, and the punch die 72 as a pressing member protrudes throughout the guide hole 71a into the die hole 70. A spring 73 is compressed between an enlarged head 72a of the punch die 72 at an upper end thereof and the tape retainer 71.

A mechanism M₃ for lifting the punch die 72 is substantially similar to that in the previously described embodiment, but a disk 62 provided on a sixth rotary shaft 33₆ in this mechanism M₃ is connected with the enlarged head 72a of the punch die 72 by a link 63.

When adhering the friction material segment 3, the punch die 72 is lowered to allow the tape retainer 71 to press the friction material tape 24. Then the friction material segment 3 is punched by the punch die 72 and subsequently pressed against and adhered to the bonding surface 2a of the core 2 by a lower end face, i.e., a pressing face 72b of the punch die 72.

An apparatus for automatically manufacturing a friction plate according to a second embodiment of the present invention will now be described in connection with the Figs. 13 to 17, wherein parts or components corresponding to those in the first embodiment are designated by like reference characters, and the description of them is omitted

First and second adhering mechanisms A₃ and A₄ in the second embodiment have the same construction, such that a friction material tape 124 having a width corresponding to a plurality of, e.g. nine friction material segments 3 located in one of a number of areas, e. g., four areas (in the illustrated embodiment) equally divided circumferentially on a core 2, is subjected to a multiple punching operation to provide nine friction material segments 3 which are then pressed against and adhered to the bonding surface 2a of the core 2. In the vicinity of the first and second adhering mechanisms A₃ and A₄, first and second winders W₁ and W₂ are disposed to reel up a waste material remaining after the multiple punching operation.

In order to correspond to the construction of the first and second adhering mechanisms A₃ and A₄, a support 7 in this embodiment is supported on a turn table 5 to rotate for every 90°. More specifically, as shown in detail in Fig. 14, an electric motor m is mounted on an underside of the turn table 5 in the vicinity of a retaining cylinder 8, and a toothed timing belt b is mounted around a driving gear G₁ secured to a driving shaft 112 of the electric motor m and a follower gear G₂ secured to an outer peripheral surface of a hollow cylinder 11 at its lower end. The electric motor m is intermittently operated in an adhering operation for the friction material segments 3 to rotate the support 7 for every 90° in a counterclockwise direction as viewed in Fig. 16.

The first and second adhering mechanisms A₃ and A₄ will be described below. Since the mechanisms A₃ and A₄ have the same construction, only the first adhering mechanism A₃ will be described.

As clearly shown in Figs. 14 and 15, provided in the vicinity of a guide mechanism 128 is a liftable pressing mechanism 138 having a multiple punching function for punching nine friction material segments 3 out of the friction material tape 124 and subsequently pressing and adhering them to the core 2.

More specifically, the guide mechanism 128 is provided with an insertion hole 139 for a tape retainer 142 above a through hole 127 through which the friction material tape 124 is inserted, and nine die holes 140 for nine punch dies 143 below the through hole 127. The die holes 140 are arranged in a circumferential direction of the core 2. The tape retainer 142 is slidably received in the insertion hole 139 and has guide holes 141 aligned with the die holes 140. The pressing mechanism 138 comprises nine punch dies 143 which protrude through the guide holes 141 into the corresponding die holes 140, and a connecting plate 144 which connects upper ends of the punch dies 143 to one another. A spring 118 is compressed between the connecting plate 144 and the tape retainer 142.

When adhering the friction material segments 3, the pressing mechanism 138 is lowered to press the friction material tape 124 by the tape retainer 142, and then, the nine friction material segments 3 are punched by all the punches 143. Each of the friction material segments 3 is pressed against and adhered to the bonding surface 2a of the core 2 by the pressing face 143a of each of the punches 143 at a lower end thereof.

Thereafter, the electric motor m is operated to rotate the support 7 through 90° for the driving gear G₁, the belt b and the follower gear G₂, thereby effecting a multiple punching operation similar to that described above and a subsequent pressing operation. In this case, the number of intermittent rotations of the support 7 is three per one surface of the core 2.

The unwinding mechanism 29 has a construction similar to that in the first embodiment, except that it is formed wider than that in the first embodiment in correspondence to the width of the friction material tape 124, as shown in Fig. 17.

A mechanism M₄ for operating the unwinding mechanism 29 and a mechanism M₅ for lifting the pressing mechanism 138 have the same constructions as the operating mechanism M₂ and the lifting mechanism M₃ in the first embodiment, respectively and hence, like parts or components are designated by like reference characters and the description of them is omitted.

By the mechanisms M₄ and M₅, the core 2 is transferred to the position of the first friction material segment adhering mechanism A₃ and then, the friction material tape 124 is unwound in an amount required for one multiple punching operation above the core 2, as shown in Fig. 16 and is subjected to the multiple punching operation to provide nine friction material segments 3 which are then pressed against and adhered to the bonding surface 2a of the core 2. Reference character 142a denotes a punched hole.

Thereafter, for the subsequent friction material segment adhering operation, the friction material tape 124 is unwound, and the core 2 is rotated for 90° along with the support 7.

The above-described unwinding, multiple punching, pressing adhering, and rotating operations are repeated sequentially to bond thirty six friction material segments to the one bonding surface 2a in four groups of nine. A waste material resulting from punching of the friction material segments from the friction material tape 124 is wound around the first winder W₁.

It should be noted that in order to increase the yield rate of the friction material tape 124, the number of friction material segments 3 punched off by the multiple punching operation and the number of intermittent rotations of the support 7 may be properly varied depending upon the magnitude of the diameter of the core 2.

An apparatus for automatically manufacturing a friction plate according to a third embodiment of the present invention will now be described in connection with Figs. 18 to 25, wherein parts or components corresponding to those in the previously-described embodiment are designated by like reference characters.

Fig. 18 illustrates the apparatus for automatically manufacturing a friction plate 1. The apparatus comprises a loading/unloading mechanism L for supplying a core and removing a friction plate, a first adhesive applying mechanism C₃, a first adhering mechanism A₅, a reversing mechanism R, a second adhesive applying mechanism C₄, a second adhering mechanism A₆, a pressing mechanism P and an inspecting mechanism I₂. These mechanisms are disposed sequentially around a turn table 5 intermittently rotatable for every 45° in a clockwise direction at distances of 45°.

A first conveyer 6₁ for conveying cores and a second conveyer 6₂ for conveying friction plates, having the same preset transporting direction, are arranged in a tangential direction of the turn table 5 on opposite sides of the loading/unloading mechanism L.

As shown in Figs. 18 and 19, the turn table 5 comprises eight core-positioning supports 207 disposed on an outer periphery thereof every 45° in a circumferential direction. The supports 207 have the same construction in which a support shaft 208 projecting from a lower surface thereof is rotatably supported through a bearing 210 in a retaining cylinder 209 which is secured to the turn table 5 to protrude therethrough. A half 211₁ constituting a friction clutch 211 is secured to a lower end of the support shaft 208 projecting from a lower end face of the retaining cylinder 209, and a spring 212 is compressed between, an upper surface of the half 211₁ and a lower surface of the retaining cylinder 209.

A plurality of rollers 213 are disposed on an upper surface of the turn table 5 around the support 207 through a support member 214. Each of the rollers 213 is loosely fitted in an annular groove 215 in an outer peripheral surface of the support 207. In a condition in which the support 207 is fixed relative to the turn table 5 with its lower surface in contact with the upper surface of the turn table 5 by a resilient force of the spring 212, each roller 213 abuts against an inner surface of the annular groove 215 at its upper portion, with a predetermined gap g left between the inner surface at a lower portion of the annular groove 215 and each roller 213.

The support 207 includes a recess 216 opened upwardly and adapted to be fitted by the core 2. Two pairs of projections 217 are formed on the support 207 at opposed locations around an inner peripheral surface of the recess 216 so as to constitute engage recesses 217a which are engageable by two of a plurality of engage protrusions 2c provided on the outer peripheral surface of the core 2. Such engagement between the recesses 217a and the two protrusions 2c ensures that the core 2 is positioned relative to the support 207.

Below the turn table 5, a lifting and rotating mechanism is provided for lifting and rotating the support 207 at each of positions at which the first and second adhesive applying mechanisms C₃ and C₄, the first and second adhering mechanism A₅ and A₆ and the inspecting mechanism I₂, used in applying the adhesive, adhering and inspecting of these mechanisms.

This lifting/rotating mechanism is constructed in the following manner:

A splined shaft 218 is provided at an upper end thereof with a half 211₂ constituting the friction clutch 211. The half 211₂ is opposed to the half 211₁ of the support 207. A splined cylinder 219 meshed with the splined shaft 218 is supported in a support cylinder 232 fixed to the support plate 220 with a bearing 221 interposed therebetween. A roller 222 is secured to a lower end of the splined shaft 218 projecting downwardly from the splined cylinder 219. A transmitting member 223 is attached to the roller 222 in such a manner to permit the rotation of the roller 222. A bell-crank 226 is swingably supported on a stationary bracket 224 through a support shaft 225 in the vicinity of the transmitting member 223. A roller 227 is mounted on a tip end of a horizontal arm 226a of the bell-crank 226 to engage a notch-like engage groove 228 open sideways in the transmitting member 223. The bell-crank 226 has a vertical arm 226b which is connected at its lower end to tips or tip ends of opposed operating elements 230₁ and 230₂ of a solenoid 229₁ for lifting and a solenoid 229₂ for lowering through a common pin 231.

Thus, when the solenoid 229₁ for lifting is activated to attract the operating element 230₁, the bell-crank 226 is swung in a clockwise direction as viewed in Fig. 19 about the support shaft 225 to lift the splined shaft 218, causing the halves 211₁ and 211₂ to abut against each other. Then, the support 207 is lifted up in an amount corresponding to the gap g against a force of the spring 212, causing the inner surface of the annular groove at its lower portion to contact with each corresponding roller 213, thereby retaining the core 2 at a predetermined height with respect to the adhesive applying mechanisms C₃ and C₄, the adhering mechanisms A₅ and A₆ and the inspecting mechanism I₂. The swinging movement of the bell-crank 226 is accepted by plays of the operating elements 230₁ and 230₂ relative to bodies of the solenoids.

A support frame 233₁ stands on an upper surface of the support plate 220 in the vicinity of the support cylinder 232. A driving gear 235₁ is secured to one end of a driving shaft 234₁ rotatably supported at the support frame 233₁ and is adapted to receive a power from the electric motor, and a transmitting bevel gear 236₁ is secured to the other end of the driving shaft 234₁. The transmitting bevel gear 236₁ is meshed with a follower bevel gear 237₁ which is secured to an outer peripheral surface of the splined cylinder 219 at its upper end.

This ensures that when the follower bevel gear 237₁ is rotated in a condition in which the halves 211₁ and 211₂ are in contact with each other to achieve an engagement of the friction clutch 211, the splined cylinder 219 and the splined shaft 218, and thus the support 207 and the core 2 are rotated. The rotation of the support 207 is conducted smoothly in a horizontal plane by rolling of the rollers 213.

As shown in Fig. 18. the loading/unloading mechanism L includes three first, second and third rotatable octopus arms 21₁, 21₂ and 21₃ which are liftable and intermittently rotatable for every 120° in a clockwise direction. Each of the rotatable arms 21₁, 21₂ and 21₃ is provided at its tip end with a collet chuck 22 which is engageable with an inner peripheral surface of the core 2. When the collet chuck 22, for example, of the first rotatable arm 21₁ is located above the terminating end of the first conveyer 6₁ during stoppage of the rotation of all the rotatable arms 21₁, 21₂ and 21₃, the collet chuck 22 of the second rotatable arm 21₂ is located above the support 207 on the turn table 5, and the collet chuck 22 of the third rotatable arm 21₃ is located above the starting end of the second conveyer 6₂.

The first and second adhesive applying mechanisms C₃ and C₄ have the same construction, and a given amount of adhesive is discharged through a discharge nozzle 240 and applied to the bonding surfaces 2a and 2b of the core 2.

The first and second adhering mechanisms A₅ and A₆ have the same construction. Friction material segments 3 are cut out one by one from a friction material tape 24, for example, by a cutting roller which will be described hereinafter; retained by the cutting roller and subsequently pressed against and adhered to the bonding surfaces 2a and 2b of the core 2 which is being rotated synchronously with the cutting roller. The details of the mechanisms A₁ and A₂ will be described hereinafter.

The reversing mechanism R comprises a pair of liftable and rotatable hands 25. The reversing mechanism R functions, after completion of the bonding of the friction material segments 3 to one of the bonding surfaces 2a, to lift and reverse the core 2 by the hands 25, thereby turning the other bonding surface 2b up.

The pressing mechanism P is intended to apply a pressing force simultaneously to all the friction material segments 3 adhered to the opposite bonding surfaces 2a and 2b of the core 2 to insure the reliable adhesion of the friction material segments 3 to the opposite bonding surfaces 2a and 2b of the core 2.

The inspecting mechanism I₂ is adapted to photo-electrically detect whether or not a predetermined number of friction material segments 3 are bonded to the opposite bonding surfaces 2a and 2b of the core 2. This inspecting operation is conducted while rotating the core 2.

The manufacturing operation of the friction plate 1 by the above described apparatus will now be explained.

Before the start of the manufacturing operation, the cores 2 with the one bonding surface 2a facing upwards are piled one on another and transported by the first conveyer 6₁. At this time, the turn table 5 is at a stop, and one support 7 is in a position corresponding to the position at which the loading/unloading mechanism L is disposed, and each of the rotatable arms 21₁, 21₂ and 21₃ is in its lifted position.

In the loading/unloading mechanism L, the rotatable arms 21₁, 21₂ and 21₃ are lowered, and a piece of core 2 is grasped horizontally by the collet chuck 22 of the first rotatable arm 21₁. Then, the rotatable arms 21₁, 21₂ and 21₃ are lifted and rotated for 120°. When the rotatable arms 21₁, 21₂ and 21₃ are lowered again, the first rotatable arm 21₁ releases the core 2 from the collet chuck 22, and the rotatable arms 21₁, 21₂ and 21₃ are lifted again. The first, second and third rotatable arms 21₁, 21₂ and 21₃ perform such motions sequentially, thereby placing the core 2, with its bonding surface 2a facing upwards, into the recess 216 of the support 207, thus positioning the core 2.

The turn table 5 is turned for 45° to transfer the core 2 to the position at which the first adhesive applying mechanism C₁ is disposed. The solenoid 229₁ for lifting is activated, causing the splined shaft 218 to rise to bring the friction clutch 211 into engagement, while causing the support 207 to rise, and further, the splined shaft 218 and thus the support 207 is rotated through the driving gear 235₁ and the like. Then, an adhesive is applied to the bonding surface 2a of the core 2 by the first adhesive applying mechanism C₃.

The solenoid 229₂ for lowering is activated, causing the splined shaft 218 to bring the friction clutch 211 out of engagement, while permitting the support 207 to lower by a resilient force of the spring 212.

The turn table 5 is turned for 45° to transfer the core 2 to the position for the first adhering mechanism A₅. At this position, the support 207 is lifted and rotated as in the adhesive applying operation, and the friction material segments 3 which has been cut out from the friction material tape 24 and retained and transferred by the cutting roller are sequentially pressed against and adhered one by one to the bonding surface 2a of the core 2, as shown in Fig. 20, thus completing the adhering operation for the large number of friction material segments 3 to the bonding surface 2a. The details of this friction material segment 3 adhering operation will be described below.

The turn table 5 is turned for 45° to transfer the core 2 to the position for the reversing mechanism R, where the core 2 is reversed, thereby turning the other bonding surface 2b up.

The turn table 5 is turned for every 45° to sequentially transfer the core 2 to the positions of the second adhesive applying mechanism C₄ and the second adhering mechanism A₆, where the application of the adhesive to the bonding surface 2b of the core 2 and the bonding of the friction material segments 3 to the bonding surface 2b are conducted in the same manner as described above, thereby providing a friction plate 1.

The turn table 5 is turned for 45° to transfer the friction plate 1 to the position for the pressing mechanism P, where a pressing force is applied commonly to all the friction material segments 3 to bond the same onto the core 2 reliably.

The turn table 5 is turned for 45° to transfer the friction plate 1 to the position for the inspecting mechanism I₂. At this position, the support 207 is lifted and rotated as in the adhesive applying operation, and it is inspected whether or not a predetermined number of friction material segments 3 are bonded to the core 2.

The turn table 5 is turned for 45° to transfer the friction plate 1 to the position for the loading/ unloading mechanism L. Until the first friction plate 1, which is made from a case firstly supplied on the support 207, reaches the inspecting mechanism I₂, the loading/unloading mechanism L repeats, 7 times, the core supplying operation similar to that described above upon every rotation of the turn table 5 for 45°. In this case, in order to supply the cores 2 one by one, a push-up mechanism is incorporated at the terminating end of the conveyer 6₁ for retaining the uppermost core 2 at the same height.

When the friction plate 1 has been transferred to the position of the loading/unloading mechanism L in the above-described manner, for example, the first rotatable arm 21, is located above the support 207. In the loading/unloading mechanism L, the rotatable arms 21₁, 21₂ and 21₃ are lowered. The first rotatable arm 21₁ grasps the friction plate 1 on the turn table 5 horizontally by the collet chuck 2, while the second rota table arm 21₂ grasps the core 2 on the first conveyor 6, horizontally by the collet chuck 22. Then, the rotatable arms 21₁, 21₂ and 21₃ are lifted and rotated for 120°. When the rotatable arms 21₁, 21₂ and 21₃ are lowered again, the first rotatable arm 21₁ releases the friction plate 1 from the collet chuck 22, and the core is released from the collet chuck 22 of the second rotatable arm 21₂. Then, the rotatable arms 21₁, 21₂ and 21₃ are lifted again. Such motions are conducted sequentially, thereby placing the friction plate 1 onto the starting end of the second conveyer 6₂, while placing the core 2 into the recess 216 of the support 207, thus positioning it. The friction plate 1 transported by the second conveyer 62 is subjected to an a drying process for drying the adhesive.

In this manner, the manufacture of the friction plate 1 is continuously carried out automatically.

The first and second adhering mechanisms A₅ and A₆ will be described below. The mechanisms A₅ and A₆ have the same construction, as described above, and hence, only the first adhering mechanism A₅ will be described.

A support frame 233₂ stands on the upper surface of the support plate 220 in the vicinity of the outer periphery of the turn table 5. A first rotary shaft 243₁ is rotatably supported on the support frame 233₂ at an intermediate portion thereof above the support 207. The shaft 243₁ has the axis perpendicular to the rotational axis of the support 207. A cutting roller 244 is secured to one end of the first rotary shaft 243₁ above the turn table 5 in a manner such that a portion of an outer peripheral surface thereof is opposed to the bonding surface 2a of the core 2. Immediately above the first rotary shaft 243₁, a second rotary shaft 243₂ is rotatably supported on the support frame 233₂ in parallel to the first rotary shaft 243₁. A receiving roller 245 is secured to one end of the second rotary shaft 243₂ above the turn table 5. The cutting roller 244 and the receiving roller 245 are in rolling contact with each other and rotated in opposite directions.

The friction material tape 24 is obtained by subjecting a friction material sheet to a slitting process. As shown in Fig. 18, a reel 26 is disposed in the vicinity of the turn table 5 with the friction material tape 24 wound therearound. A guide member 248 is disposed to locate its tip end near the contact portion of the cutting roller 244 and the receiving roller 245. The guide member 248 is provided with a through hole 247 through which the friction material tape 24 is inserted. A feed roller pair 249 as a feeding member is disposed upstream of the guide member 248 in the supplying direction of the material tape 24. Accordingly, the friction material tape 24 is unwound from the reel 26 by the aid of the feed roller 249, through the through hole 247 in the guide member 248 and fed into between the cutting roller 244 and the receiving roller 245. In Fig. 18, reference numeral 37 designates a tensioning roller for providing a given tension to the friction material tape 24.

The cutting roller 244 comprises a short cylinder 244a, an annular end wall 244b connected to the short cylinder 244a at its end adjacent the support frame 233₂, and a boss 244c projecting from the center of the annular end wall 244b into the short cylinder 244a.

Referring also to Figs. 23 and 24, the short cylinder 244a includes a large number of cutting blades 251 which are disposed radiately on an outer peripheral surface thereof at equal distances. The cutting blades 251 can be in contact with the receiving roller 245. A cutting edge of each of the cutting blades 251 is oriented in a generating line of the outer peripheral surface of the short cylinder 244a. The spacing between two adjacent cutting blades 251 is equal to the width of the friction material segment in a circumferential direction of the core 2.

A through hole 252 is formed in the short cylinder 244a between every two adjacent cutting blades 251. A pressing pin 253 as a pressing member is slidably received in each of the through holes 252. The pressing pin 253 includes a pressing portion 253a and a hemispherical engage portion 253b on opposite ends thereof. The pressing portion 253a is disposed between the opposed surfaces of the cutting blades 251. The hemispherical engage portion 253b is located within the short cylinder 244a. A spring 254 is compressed between an inner peripheral surface of the short cylinder 244a and the engage portion 253b.

As shown in Fig. 25, in a retreated position of the pressing pin 253 in which the pressing pin 253 slides inwardly radially of the short cylinder 244a by a resilient force of the spring 254, each of the points of the opposed blades 251 projects from an end face of the pressing portion 253a by a distance equal to the thickness of the friction material segment. On the other hand, in an advanced position of the pressing pin 253 in which the pressing pin 253 slides outwardly radially of the short cylinder 244a against the resilient force of the spring 254, the end face of the pressing portion 253a projects from the level of the points of the opposed cutting blades 251.

A roller supporting portion 255a of a stationary bracket 255 protrudes into the short cylinder 244a between the rotational axis of the cutting roller 244 and the core 2. A push-out roller 256 is supported by a pin on the roller supporting portion 255a with its rotational axis parallel to that of the cutting roller 244. The roller 256 is adapted to come into rolling contact with the engage portion 253b of one of the pressing pins 253 as a result of rotation of the cutting roller 244, thereby causing such pressing pin 253 to slide from the retreated position to the advanced position against the resilient force of the spring 254. This allows the friction material segment 3 retained by the opposed cutting blades 251 to be pushed out by the pressing pin 253 and pressed against and adhered to the bonding surface 2a of the core 2.

As described above, the lifting/rotating mechanism for the support 207 is provided below the turn table 5 at the position for the first adhering mechanism A₅. A first gear 258₁ secured to the first rotary shaft 243₁ is meshed, through a transmitting gear 257, with a driving gear 235₂ of a driving shaft 234₂ which is a component of such lifting/rotating mechanism. And a second gear 258₁ secured to the second rotary shaft 243₂ is meshed with the first gear 258₁.

The number of teeth of each of the gears 235₂, 236₂, 237₂, 257, 258₁and 258₂ is set such that the support 207 and the cutting roller 244 rotate synchronously.

The operation of the first adhering mechanism A₅ will be described below in connection with Figs. 22, 24 and 25.

The support 207 with the core 2 with the adhesive on the bonding surface 2a is in its lifted position and rotated in a counterclockwise direction as viewed in Fig. 22 by the driving gear 235₂. The cutting roller 244 is rotated in a clockwise direction as viewed in Fig. 22 and the receiving roller 245 is rotated in the counterclockwise direction, both synchronously with the support 207. The tip end of the friction material tape 24 has been pulled out from between the cutting roller 244 and the receiving roller 245 prior to the operation.

When the friction material tape 24 has been fed into between the cutting roller 244 and the receiving roller 245 by the feed roller pair 249, a piece of friction material segment 3 is cut out by cooperation of the two cutting rollers 251: one located forwardly in the rotational direction and the other located rearwardly in the rotational direction adjacent the one cutting roller 251, and the receiving roller 245, as shown in Fig. 24. Such friction material segment 3 is retained between the opposed cutting blades 251 which have contributed to the cutting. In this case, the pressing pin 253 between these two cutting blades 251 is in the retreated position, and a feeding force is applied to the friction material tape 24. Therefore, the friction material segment 3 is deformed so as to describe a convex arc toward the end face of the pressing portion 253a of the pressing pin 253. This ensures that the friction material segment 3 is reliably retained between the two cutting blades 251.

The cutting and retaining of the friction material segment 3 are conducted sequentially by cooperation of the two adjacent cutting blades 251 and the receiving roller 245.

When a piece of friction material segment 3 is transferred to just above the bonding surface 2a of the core 2 as a result of rotation of the cutting roller 244, as shown in Fig. 25, the engage portion 253b of the pressing pin 253 located between the two cutting blades 251 for retaining such friction material segment 3 is brought into rolling contact with the push-out roller 256. As a result, the pressing pin 253 slides to the advanced position, so that the friction material segment 3 is pushed out from between the two cutting blades 251 and pressed against and adhered to the bonding surface 2a of the core 2 by the pressing portion 253a.

The pressing and adhering of the friction material segment 3 are applied sequentially to the bonding surface 2a of the core 2. When the pressing pin 253 departs from the push-out roller 256, it returns to the retreated position by the resilient force of the spring 254.

It should be noted that in order to manufacture the friction plate 1 efficiently in a short time, the number of cutting/adhering components such as the cutting rollers 244 and the receiving rollers 245 in each of the adhering mechanisms A₅ and A₆, i.e., the number of friction material tapes 24 supplied may be varied properly depending upon the magnitude of the diameter of the core 2.

An apparatus for automatically manufacturing a friction plate according to a fourth embodiment of the present invention will now be described in connection with Figs. 26 to 29, wherein parts or components corresponding to those in the above-described embodiments are designated by like reference characters.

Fig. 26 illustrates an apparatus for automatically manufacturing a friction plate 1 of the type firstly described above. The apparatus comprises a chain type main conveyer 305 which conveys an object from a left end toward a right end. The apparatus further comprises a loading mechanism L₁ for supplying a core, a first adhesive applying mechanism C₅, a first adhering mechanism A₇, a reversing mechanism R, a second adhesive applying mechanism C₆, a second adhering mechanism A₈, a pressing mechanism P, an inspecting mechanism I, and an unloading mechanism U for removing a friction plate. These mechanisms are disposed sequentially at predetermined distances from the left end toward the right end in the vicinity of and along the main conveyer 305.

A first conveyer 6₁ is disposed in parallel at the left end of the main conveyer 305 for transporting a core 2 to the position for the loading mechanism L₁. A second conveyer 6₂ is disposed in parallel at the right end of the main conveyer 305 for transporting the friction plate 1 removed by the unloading mechanism U.

During operation of manufacturing the friction plate 1, the main conveyer 305 is always adapted to convey an object from the left end to the right end as viewed in Fig. 26. A plurality of carrying rests 307 are placed on the main conveyer 305 for carrying a core 2 (or a friction plate 1).

Referring also to Fig. 27, each of the carrying rests 307 is substantially a rectangular shape in plane, and the transportation thereof is guided by a pair of guide members 308 located on opposite sides of the main conveyer 305 in a direction of movement of the main conveyer 305. Each of the guide members 308 includes projecting edges 308a projecting inwardly. The carrying rest 307 includes projecting edges 307a at opposite sides located below the projecting edges 308a. A predetermined gap g₁ is formed between the projecting edges 307a and 308a so that the transportation of the carrying rest cannot be obstructed.

The carrying rests 307 have the same construction and each comprises a large diameter circular recess 309a opened upwardly, a mean diameter circular recess 309b opened downwardly, and a small diameter bore 309c communicating the large and small recesses 309a and 309c with each other. A disk-like core support 310 is rotatably received in the large diameter recess 309a, and a projecting shank 311 on a lower surface of the support 310 is likewise rotatably received in a bearing member 312 which defines the small diameter bore 309c. A half 313₁ constituting a friction clutch 313 together with a half 313₂ is accommodated in the mean diameter recess 309b and has a threaded shaft 314 which is projectingly provided on an upper surface thereof and screwed in the projecting shank 311. A spring 315 is compressed between the half 313₁ and a ceiling surface of the mean diameter recess 309b. The half 313₁ is biased downwardly by a resilient force of the spring 315 to form a gap g₂ between the ceiling surface and an upper surface of the half 313₁.

As shown in Fig. 28, the support 310 includes a recess 316 opened upwardly for receiving a core 2. Two projections 317 are formed at opposed locations on an inner peripheral surface of the recess 316 to form engage recesses 317, respectively. The recesses 317 are adapted to be fitted by two of a plurality of engage projections 2c located in an outer peripheral surface of the core 2. The positioning of the core relative to the support 310 is achieved by the engagement of the recesses 317 with the projections 2c.

A mechanism for fixing the carrying rest 307 and a mechanism for lifting and rotating the support 310 are provided below the main conveyer 305 at each of the positions for the first and second adhesive applying mechanisms C₅ and C₆, the first and second adhering mechanisms A₇ and A₈ and are used for applying and adhering operations of these mechanisms.

The fixing mechanism includes a stop pin 318 (Fig. 26) and an operating cylinder 320. The stop pin 318 is adapted to project into a path for the carrying rest 307 to stop the carrying rest 307, when the carrying rest 307 is transferred to each of corresponding positions. The operating cylinder 320 is adapted to lift the carrying rest 307 above the main conveyer 305 to cause both projecting edges 307a to mate with the projecting edges 308a of the guide members 308 respectively by expanding a piston rod 319, when the carrying rest 307 has been stopped. The operating cylinder 320 is disposed on the upper surface of the support plate 321 below four corners of the carrying rest 307.

The lifting/rotating mechanism is constructed in the following manner:

A splined shaft 322 having the half 313₂ constituting the friction clutch 313 at its upper end is disposed so that the half 313₂ can be opposed to the half 313₁ of the carrying rest 307. A splined cylinder 323 meshed with the splined shaft 322 is supported in a support cylinder 324 fixed to the support plate 321. Bearings 325₁ are interposed between the cylinders 323 and 324. A roller 326 is secured to the splined shaft 322 at lower end projecting downwardly from the splined cylinder 323. A transmitting member 327 is mounted to the roller 326 in such a manner to permit the rotation of the roller 326. A bell-crank 330 is swingably supported on a stationary bracket 328 through a support shaft 329 in the vicinity of the transmitting member 327. A roller 331 is mounted at a tip end of a horizontal arm 330a of the bell-crank 330 to engage a notch-like engage groove 327a opened sideways in the transmitting member 327. The bell-crank 330 has a vertical arm 330b which is connected at its lower end to tip ends of opposed operating elements 333₁ and 333₂ of a solenoid 332₁ for lifting and a solenoid 332₂ for lowering through a common pin 334.

Thus, when the solenoid 332₁ for lifting is activated to withdraw the operating element 333₁, the bell-crank 330 is swung in a clockwise direction as viewed in Fig. 27 about the support shaft 334 to lift the splined shaft 322, bringing the halves 313₁ and 313₂ into frictional contact with each other. The support 310 is lifted up in an amount corresponding to the gap g₂ against the resilient force of the spring 315, thereby retaining the core 2 at a predetermined level relative to the adhesive applying mechanisms C₅ and C₆ and the adhering mechanisms A₇ and A₈. The swinging movement of the bell-crank 330 is accepted by plays of the operating elements 333₁ and 333₂ relative to bodies of the solenoids.

An electric motor 335 is mounted to the lower surface of the support plate 321 in the vicinity of the support cylinder 324. A driving gear 337 is secured to an upper end of a driving shaft 336 extending through the support plate 321. A toothed timing belt 339 is mounted between the driving gear 337 and a follower gear 338 secured to an outer peripheral surface of the splined cylinder 323 at its upper end.

This ensures that when the electric motor 335 is operated with the halves 313₁ and 313₂ in frictional contact with each other to provide the engagement of the friction clutch 313, the splined shaft 322 and thus the support 310 and the core 2 are rotated through the driving gear 337, the timing belt 339, the follower gear 338 and the splined cylinder 323.

The electric motor 335 located at the positions for the adhesive applying mechanisms C₅ and C₆ is continuously rotated, and the core 2 is rotated in one rotation. The electric motor 335 located at the positions of the adhering mechanisms A₇ and A₈ is intermittently rotated during every adhesion of the friction material segment.

The above-described fixing mechanism and a lifting mechanism, excluding a rotatable member such as the electric motor 335, are disposed at each of positions for the loading mechanism L₁, the reversing mechanism R, the pressing mechanism P, the inspecting mechanism I and the unloading mechanism U.

The loading mechanism L₁ comprises a liftable and swingable arm 340₁ adapted to reciprocally swing between the main conveyer 305 and the first conveyer 6₁. A collet chuck 341₁ is mounted at a tip end of the swingable arm 340₁ and engageable with and disengageable from the inner peripheral surface of the core 2. The unloading mechanism U is constructed in the same manner as the loading mechanism L1, and hence, comprises a swingable arm 340₂ and a collet chuck 341₂.

The first and second adhesive applying mechanisms C₅ and C₆ have the same construction and each comprises a stationary brush 343 mounted at a lower end of a hollow shaft 342, as shown in Fig. 29, and an adhesive is supplied through a first feed pipe 343₁ to the hollow shaft 342, and pressurized air for feeding the adhesive is supplied through a second feed pipe 343₂ to the hollow shaft 342.

The first and second adhering mechanisms A₇ and A₈ have the same construction. Two friction material tapes 24 are unwound in an amount corresponding to a piece of friction material segment 3 at a plurality of unwind positions arranged at equal distances in a circumferential direction of the core 2, e.g., two unwind positions D₁ and D₂, and friction material segments 3 are cut out one by one from each of the friction material tapes 24 and subsequently pressed against and adhered to the bonding surfaces 2a and 2b of the core 2. The details of the mechanisms A₇ and A₈ will be described hereinafter.

The reversing mechanism R comprises a pair of liftable and rotatable hands 25. The reversing mechanism R functions, after completion of the bonding of the friction material segments 3 to one of the bonding surfaces 2a, to lift and reverse the core 2 by bringing the hands 25 into engagement with the outer peripheral surface of the core 2, thereby turning the other bonding surface 2b up.

The pressing mechanism P is intended to apply a pressing force commonly to all the friction material segments 3 adhered to the opposite bonding surfaces 2a and 2b of the core 2 to insure the reliable adhesion of the friction material segments 3 to the opposite bonding surfaces 2a and 2b of the core 2.

The inspecting mechanism I is adapted to photo-electrically detect whether or not a predetermined number of friction material segments 3 are adhered to the opposite bonding surfaces 2a and 2b of the core 2.

A procedure of manufacturing a friction plate 1 by the above-described apparatus will be described below.

Before the start of the manufacturing operation, the cores 2 with the one bonding surface 2a facing upwards are piled one on another on the first conveyer 6₁ and transported to the terminating end in the vicinity of the loading mechanism L₁.

The main conveyer 305 is operated, and the carrying rest 307 is placed onto the main conveyer 305 at the left end thereof. When the carrying rest 307 has reached the position for the loading mechanism L₁, it is stopped by projection of the stop pin 318. Then, the piston rod 319 of the operating cylinder 320 is expanded to lift the carrying rest 307 to a position above the main conveyer 305 and fix it.

Thereafter, the solenoid 332₁ for lifting is activated to lift the carrying rest 310 through the splined shaft 322 and the like.

The swingable arm 340₁ is lowered to the first conveyer 6₁ by the operation of the loading mechanism L₁ to grasp one core 2 on the first conveyer 61. Then, the swingable arm 340₁ is lifted and thereafter, is swung to above the main conveyer 305, and lowered again to release the core 2. This causes the core 2 to be fitted into and positioned in the recess 316 in the support 310 with the one bonding surface 2a facing upwards.

The solenoid 332₁ for lowering is activated, thereby lowering the splined shaft 322 and permitting the support 310 to be lowered by the resilient force of the spring 315. Then, the piston rod 319 of the operating cylinder 320 is contracted, and the stop pin 318 is lowered, permitting the carrying rest 307 to be placed again onto the main conveyer 305 and transported.

When the carrying rest 307 has reached the position for the first adhesive applying mechanism C₅, the lifting and fixing of the carrying rest 307 and the subsequent lifting of the support 310 are conducted in the same manner as described above, thereby bringing the bonding surface 2a of the core 2 into sliding contact with the brush 343.

The electric motor 335 is operated for continuous rotation, thereby rotating the support 310. and the adhesive is applied to the bonding surface 2a of the core 2.

The carrying rest 307 is placed again onto the main conveyer 305 and transported in the same manner as described above.

When the carrying rest 307 has reached the position for the first adhering mechanism A₇, the lifting and fixing of the carrying rest 307 and the subsequent lifting of the support 310 are conducted in the same manner as described above.

Each of the friction material tapes 24 is unwound to each of the unwind positions D₁ and D₂ above the core 2 in an amount corresponding to a piece of friction material segment 3. Thereafter, each of the friction material tapes 24 is subjected to a cutting process to provide a friction material segment 3 which is then pressed against and adhered to the bonding surface 2a of the core 2.

Thereafter, each of the friction material tapes 24 is unwound in an amount corresponding to the next friction material segment, and the electric motor 335 is operated for intermittent rotation to rotate the core 2 along with the support 310 for the adhering such friction material segment.

The above-described unwinding, cutting, pressing/adhering and intermittently rotating operations are repeated sequentially, thereby adhering a large number of friction material segments 3 one by one to the one bonding surface 2a, as shown in Fig. 28. The detail of the operation of adhering the friction material segments 3 will be described below.

The carrying rest 307 is placed again onto the main conveyer 305 and transported in the same manner as described above.

When the carrying rest 307 has reached the position for the reversing mechanism R, the lifting and fixing of the carrying rest 307 and the subsequent lifting of the support 310 are conducted in the same manner as described above. The core 2 is reversed by the reversing mechanism R to turn the other bonding surface 2b up.

Then, the application of the adhesive by the second adhesive applying mechanism C₆ and the adhering of a large number of friction material segments 3 by the second adhering mechanism A₈ are conducted in the same manner to provide a friction plate.

Thereafter, the carrying rest 307 is transported to the position for the pressing mechanism P, where a pressing force is applied commonly to all the friction material segments 3 to insure the reliable bonding of these segments 3, and then, the carrying rest 307 is transported to the position for the inspecting mechanism I. In this position, the inspecting mechanism I inspects whether or not a predetermined number of friction material segments are adhered to the core 2. Even in the positions for the pressing mechanism P and the inspecting mechanism I, the lifting and fixing of the carrying rest 307 and the subsequent lifting of the support 310 are conducted.

When the lifting and fixing of the carrying rest 307 and the subsequent lifting of the support 310 have been conducted in the position for the unloading mechanism in, the swingable arm 340₂ is lowered to the main conveyer 305 by the operation of the mechanism in to grasp the friction plate 1 on the support 310. Then, the swingable arm 340₂ is lifted and then, is lowered again to release the friction plate 1. This causes the friction plate 1 to be placed onto the starting end of the second conveyer 6₂. The friction plate 1 transported by the second conveyer 6₂ is subjected to a drying process for drying the adhesive.

The manufacture of the friction plate 1 is continuously carried out automatically in this manner.

The first and second adhering mechanisms A₇ and A₈ will now be described. The mechanisms A₇ and A₈ have the same construction, as described above and hence, only the first adhering mechanism A₇ will be described.

The friction material tape 24 is obtained by subjecting a friction material sheet to a slitting process. As shown in Fig. 26, a pair of reels are disposed on opposite sides of the main conveyer 305, with the friction material tape 24 wound therearound respectively. A guide cylinder 348 (Fig. 27), having a through hole 347 through which each of the friction material tapes 24 is inserted, is disposed above the main conveyer 305, so that the tip end of the friction material tapes 24 can be guided to each of the unwind positions D₁ and D₂.

An unwinding mechanism 29 is disposed between each of the reels 26 and the corresponding guide cylinder 348 for intermittently unwinding the friction material tape 24 in an amount corresponding to a piece of friction material segment 3 to each of the unwind positions D₁ and D₂. The unwinding mechanism 29 has the same construction as that in the previously described first embodiment.

A liftable pressing mechanism 38 is disposed in the vicinity of each of the guide cylinders 348 for cutting out the friction material segment 3 from the friction material tape 24 and subsequently pressing and adhering it to the core 2. The pressing mechanism 38 has the same construction as that in the previous first embodiment.

In this embodiment, a mechanism M₂ for operating the unwinding mechanism 29 and a mechanism M₃ for lifting the pressing mechanism 38 are similar to those in the first embodiment, and the operation of the first adhering mechanism A₇ is also similar to that in the first embodiment.

Thus at least in its preferred embodiments, the present invention provides an economical manufacturing process and a manufacturing apparatus for use in such a process, wherein the yield rate of a friction article can be increased, and an oil groove having the same depth as the thickness of the article can be made.

## Claims

1. A process for manufacturing a clutch friction plate (1), comprising bonding a plurality of friction material segments (3) to an annular core (2) in a circumferential configuration, the friction material segments being bonded to the core with spaces (4) between adjacent segments which define oil grooves.

2. A process as claimed in claim 1, comprising the steps of:
positioning the core (2) such that the bonding surface, which has an adhesive applied thereto, faces upwards;
unwinding a friction material tape (24) to a position above said core by an amount corresponding to a friction material segment;
cutting said friction material tape (24) to provide said friction material segment (3), and pressing and adhering said friction material segment (3) to said bonding surface of said core (2); and
unwinding said friction material tape (24) by an amount corresponding to a next friction material segment (3), and rotating said core (2) in preparation for adhering of the next said friction material segment (3).

3. A process as claimed in claim 1, comprising the steps of:
positioning said core (2) such that said bonding surface, which has an adhesive applied thereto, faces upwards;
unwinding a friction material tape (124) having a width corresponding to that of areas equally divided circumferentially on said core to a position above said core, in an amount corresponding to a plurality of friction material segments (3) located in one of said areas;
subjecting said friction material tape (124) to multiple punching to provide a plurality of the friction material segments (3), and pressing and adhering said friction material segments (3) to said bonding surface of said core; and
unwinding said friction material tape (124), and rotating said core (2) in preparation for a subsequent adhering of subsequent friction material segments (3).

4. A process as claimed in claim 1, comprising the steps of:
feeding a friction material tape (24) to a position between a receiving roller (245) and a cutting roller (244) having a large number of cutting blades (251) disposed radially at equal distances on an outer peripheral surface of the cutting roller,
cutting out and retaining each of the friction material segments (3) sequentially from said friction material tape (24) by cooperation of two adjacent cutting blades of the cutting roller (244) and said receiving roller (245), and
pushing out each individual retained friction material segment (3) from a position between the cutting blades and pressing and adhering the friction material segment onto said bonding surface of said core (2) while rotating the core synchronously with said cutting roller around an axis perpendicular to the axis of the cutting roller.

5. A process as claimed in claim 1, comprising the steps of:
positioning said core (2) such that said bonding surface, having an adhesive applied thereto, faces upwards;
unwinding a plurality of friction material tapes (24) each by an amount corresponding to one of the friction material segments (3) at a plurality of unwinding positions (D₁,D₂) arranged above said core (2) at equal distances in a circumferential direction of said core;
cutting each of said friction material tapes (24) to provide said friction material segment (3), and pressing and adhering said friction material segment to said bonding surface of said core (2); and
unwinding each of said friction material tapes (24) by an amount corresponding to a subsequent friction material segment (3), and rotating said core (2) in preparation for adhering of said subsequent friction material segment.

6. A process as claimed in any one of claims 1 to 5, wherein said annular core has bonding surfaces on opposite sides thereof, said process further comprising the steps of:
supplying said annular core (2) into a manufacturing line of the friction plate;
conducting, in the manufacturing line, adhering of the friction material segments (3) to the plate by:
applying the adhesive to one of opposite surfaces of the core (2);
pressing and adhering said friction material segments (3) to said one bonding surface of said core;
after completing adhering of the friction material segments (3) to said one bonding surface, reversing said annular core upwards;
applying the adhesive to the other bonding surface of the core (2);
adhering friction material segments (3) to said other bonding surface of the core in a manner similar to that performed for said one bonding surface; and
pressing entirely the annular core with the friction material segments adhered to its opposite bonding surfaces to obtain the friction plate; and
then taking out the friction plate from the manufacturing line.

7. A process as claimed in claim 6, wherein said manufacturing line extends substantially as a circle.

8. A process as claimed in either of claims 6 and 7, wherein supplying of said annular core and taking out of said friction plate are performed at one position in said manufacturing line.

9. A process as claimed in claim 6, wherein said manufacturing line extends substantially linearly.

10. A process as claimed in claim 9, wherein supplying of said annular core and taking out of said friction plate are performed at one and another end positions in said linear manufacturing line.

11. A process as claimed in any of claims 2 to 10, further comprising the step of inspecting the obtained friction plate to see whether said friction material segments are bonded to the annular core reliably and in a desired manner, before taking out the friction plate from the manufacturing line.

12. Apparatus for carrying out the process as claimed in claim 1, comprising:
a support (7) on which said core (2) is to be positioned with said bonding surface, having an adhesive applied thereto, facing upwards and which is arranged to be intermittently rotated to position it in preparation for adhering of each friction material segment;
an unwinding mechanism (29) for intermittently unwinding a friction material tape to a position above said support by an amount corresponding to each of the friction material segments; and
a liftable pressing mechanism (38) for cutting and pressing said friction material tape and adhering the resulting friction material segment to said core.

13. Apparatus for carrying out the process as claimed in claim 1, comprising:
a support (7) on which said core is to be positioned with the bonding surface, having an adhesive applied thereto, facing upwards and which is arranged to be intermittently rotated to positicn it in preparation for adhering of said friction material segments;
an unwinding mechanism (29) for unwinding a friction material tape to a position above said core, said tape having a width corresponding to that of the friction material segments which are to be located on areas of said core which are equally divided circumferentially; and
a liftable pressing mechanism (138) for subjecting said friction material tape to multiple punching to provide a plurality of the friction material segments, and for pressing and adhering the resulting friction material segments to said core.

14. Apparatus for carrying out the process as claimed in claim 1, comprising:
a feed mechanism for feeding a friction material tape to a position between a cutting roller (244) and a receiving roller (245) which are rotated with their outer peripheral surfaces opposed to each other,
a support (207) disposed adjacent said cutting roller (244) to rotate synchronously with the cutting roller, for supporting said core (2) with the bonding surface opposed to the outer peripheral surface of said cutting roller, said cutting roller including a plurality of cutting blades (251) disposed radially at equal distances on the outer peripheral surface thereof, two adjacent cutting blades of the cutting blades being capable of cutting off the friction material segment (3) from the friction material tape (24) and retaining it by cooperation with said receiving roller (245), and
a pressing member (253a) disposed between two adjacent cutting blades for reciprocal movement between a retracted position in which said pressing member permits the cutting and retaining of said friction material segment by the cutting blades (251) and an advanced position in which said pressing member pushes out said friction material segment from a position between the two cutting blades to press it against said bonding surface.

15. Apparatus for carrying out the process as claimed in claim 1, comprising:,
a support (7) on which said core is to be positioned with said bonding surface, having an adhesive applied thereto, facing upwards and which is arranged to be intermittently rotated in preparation for adhering of the friction material segments;
a plurality of unwinding mechanisms (29) for intermittently unwinding a plurality of friction material tapes (24) each by an amount corresponding to one friction material segment (3) to a plurality of unwind positions (D₁,D₂) arranged above said support at equal distances in a circumferential configuration of said core (2); and
a plurality of liftable pressing mechanisms (38) for cutting said friction material tapes (24), and pressing and adhering said resulting friction material segments (3) to said core (2).

## Patentansprüche

1. Verfahren zur Herstellung einer Kupplungsreibscheibe (1), umfassend: Befestigen einer Mehrzahl von Reibmaterialsegmenten (3) in Umfangskonfiguration auf einem ringförmigen Kern (2), wobei die Reibmaterialsegmente auf dem Kern mit Ölnuten begrenzenden Abständen (4) zwischen benachbarten Segmenten befestigt werden.

2. Verfahren nach Anspruch 1, umfassend die Schritte:
Positionieren des Kerns (2) derart, daß die Befestigungsfläche mit darauf aufgebrachtem Klebstoff nach oben weist;
Abwickeln eines Reibmaterialbands (24) zu einer Position über dem Kern um einen Betrag, der einem Reibmaterialsegment entspricht;
Schneiden des Reibmaterialbands (24) zum Bereitstellen des Reibmaterialsegments (3) und Pressen und Kleben des Reibmaterialsegments (3) auf die Befestigungsfläche des Kerns (2); und
Abwickeln des Reibmaterialbands (24) um einen Betrag, der einem nächsten Reibmaterialsegment (3) entspricht, und Drehen des Kerns (2) in Vorbereitung zum Ankleben des nächsten Reibmaterialsegments (3).

3. Verfahren nach Anspruch 1, umfassend die Schritte:
Positionieren des Kerns (2) derart, daß die Befestigungsfläche mit darauf aufgebrachtem Klebstoff nach oben weist;
Abwickeln eines Reibmaterialbands (124) mit einer Breite, die der von in Umfangsrichtung auf dem Kern gleichmäßig unterteilten Bereichen entspricht, zu einer Position über dem Kern um einen Betrag, der einer Mehrzahl von Reibmaterialsegmenten (3) entspricht, die sich in einem der Bereiche befinden;
Unterziehen des Reibmaterialbands (124) einer Mehrfachstanzung zur Bildung einer Mehrzahl der Reibmaterialsegmente (3), und Pressen und Ankleben der Reibmaterialsegmente (3) auf die Befestigungsfläche des Kerns; und Abwickeln des Reibmaterialbands (124) und Drehen des Kerns (2) in Vorbereitung einer nachfolgenden Anklebung nachfolgender Reibmaterialsegmente (3).

4. Verfahren nach Anspruch 1, umfassend die Schritte:
Zuführen eines Reibmaterialbands (24) zu einer Position zwischen einer Aufnahmerolle (245) und einer Schneidrolle (244) mit einer großen Anzahl von Schneidblättern (251), die radial mit gleichen Abständen auf einer Außenumfangsfläche der Schneidrolle angeordnet sind,
Ausschneiden und Halten jedes der Reibmaterialsegmente (3) nacheinander von dem Reibmaterialband (24) durch Zusammenwirken zweier benachbarter Schneidblätter der Schneidrolle (244) und der Aufnahmerolle (245); und
Herausdrücken jedes einzelnen gehaltenen Reibmaterialsegments (3) von einer Position zwischen den Schneidblättern und Pressen und Kleben des Reibmaterialsegments auf die Befestigungsfläche des Kerns (2), während Drehung des Kerns synchron mit der Schneidrolle um eine zur Achse der Schneidrolle orthogonale Achse.

5. Verfahren nach Anspruch 1, umfassend die Schritte:
Positionieren des Kerns (2) derart, daß die Befestigungsfläche mit darauf aufgebrachtem Klebstoff nach oben weist;
Abwickeln einer Mehrzahl von Reibmaterialbändern (24) jeweils um einen Betrag, der einem der Reibmaterialsegmente (3) entspricht, an einer Mehrzahl von Abwicklungspositionen (D₁, D₂), die über dem Kern (2) mit gleichen Abständen in Umfangsrichtung des Kerns angeordnet sind;
Schneiden jedes der Reibmaterialbänder (24) zum Bereitstellen des Reibmaterialsegments (3) und Pressen und Kleben des Reibmaterialsegments auf die Befestigungsfläche des Kerns (2); und
Abwickeln jedes der Reibmaterialbänder (24) um einen Betrag, der einem nachfolgenden Reibmaterialsegment (3) entspricht, und Drehen des Kerns (2) in Vorbereitung zum Ankleben des nachfolgenden Reibmaterialsegments.

6. Verfahren nach einem der Ansprüche 1 bis 5, in dem ein ringförmiger Kern an seinen entgegengesetzten Seiten Befestigungsflächen aufweist, wobei das Verfahren ferner die Schritte umfaßt:
Zuführen des ringförmigen Kerns (2) in eine Fertigungslinie der Reibscheibe;
Durchführung des Anklebens von Reibmaterialsegmenten (3) auf die Scheibe in der Fertigungslinie durch:
Auftragen des Klebstoffs auf eine der entgegengesetzten Oberflächen des Kerns (2);
Pressen und Kleben der Reibmaterialsegmente (3) auf die eine Befestigungsfläche des Kerns;
nach Abschluß des Klebens der Reibmaterialsegmente (3) auf die eine Befestigungsfläche, Umdrehen des ringförmigen Kerns nach oben;
Auftragen des Klebstoffs auf die andere Befestigungsfläche des Kerns (2);
Kleben von Reibmaterialsegmenten (3) auf die andere Befestigungsfläche des Kerns in ähnlicher Weise, in der dies für die eine Befestigungsfläche durchgeführt wurde; und insgesamt Pressen des Ringkerns mit den auf seinen entgegengesetzten Befestigungsflächen haftenden Reibmaterialsegmenten zum Erhalt der Reibscheibe; und
dann Herausnehmen der Reibscheibe aus der Fertigungslinie.

7. Verfahren nach Anspruch 6, in dem die Fertigungslinie im wesentlichen im Kreis verläuft.

8. Verfahren nach einem der Ansprüche 6 und 7, in dem das Zuführen des ringförmigen Kerns und das Herausnehmen der Reibscheibe in der Fertigungslinie an einer Stelle durchgeführt werden.

9. Verfahren nach Anspruch 6, in dem die Fertigungslinie im wesentlichen linear verläuft.

10. Verfahren nach Anspruch 9, in dem das Zuführen des ringförmigen Kerns und Herausnehmen der Reibscheibe an einer und an einer anderen Endstelle in der linearen Fertigungslinie durchgeführt werden.

11. Verfahren nach einem der Ansprüche 2 bis 10, das ferner den Schritt umfaßt: Inspizieren der erhaltenen Reibscheibe zur Sichtung, ob die Reibmaterialsegmente zuverlässig und in gewünschter Weise auf dem Ringkern befestigt sind, bevor die Reibscheibe von der Fertigungslinie abgenommen wird.

12. Vorrichtung zur Durchführung des Verfahrens nach Anspruch 1, umfassend:
einen Halter (7), auf dem der Kern (2) anzuordnen ist, dessen Befestigungsfläche mit darauf aufgebrachtem Klebstoff nach oben weist, und der zur intermittierenden Drehung angeordnet ist, um ihn in Vorbereitung zum Aufkleben jedes Reibmaterialsegments zu positionieren;
einen Abwickelmechanismus (29) zum intermittierenden Abwickeln eines Reibmaterialbands zu einer Position über dem Halter um einen Betrag, der jedem der Reibmaterialsegmente entspricht; und
einen anhebbaren Preßmechanismus (38) zum Schneiden und Pressen des Reibmaterialbands und Kleben des sich ergebenden Reibmaterialsegments auf den Kern.

13. Vorrichtung zur Durchführung des Verfahrens nach Anspruch 1, umfassend:
einen Halter (7), auf dem der Kern zu positionieren ist, dessen Befestigungsfläche mit darauf aufgebrachtem Klebstoff nach oben weist, und der zur intermittierenden Drehung angeordnet ist, um ihn in Vorbereitung zum Aufkleben der Reibmaterialsegmente zu positionieren;
einen Abwickelmechanismus (29) zum Abwickeln eines Reibmaterialbands zu einer Position über dem Kern, wobei das Band eine Breite hat, die der der Reibmaterialsegmente entspricht, die auf in Umfangsrichtung gleichmäßig unterteilten Bereichen des Kerns anzuordnen sind; und
einen anhebbaren Preßmechanismus (138) zum Unterziehen des Reibmaterialbands einer Mehrfachstanzung zur Bildung einer Mehrzahl der Reibmaterialsegmente und zum Pressen und Kleben der sich ergebenden Reibmaterialsegmente auf den Kern.

14. Vorrichtung zur Durchführung des Verfahrens nach Anspruch 1, umfassend:
einen Zuführmechanismus zum Zuführen eines Reibmaterialbands zu einer Position zwischen einer Schneidrolle (244) und einer Aufnahmerolle (245), die mit ihren einander gegenüberstehenden Außenumfangsflächen gedreht werden,
einen Halter (207), der neben der Schneidrolle (244) zur synchronen Drehung der Schneidrolle angeordnet ist, zum Halten des Kerns (2), dessen Befestigungsfläche der Außenumfangsfläche der Schneidrolle gegenüberliegt, wobei die Schneidrolle eine Mehrzahl von Schneidblättern (251) umfaßt, die mit gleichen Abständen an ihrer Außenumfangsfläche radial angeordnet sind, wobei zwei benachbarte Schneidblätter der Schneidblätter in der Lage sind, das Reibmaterialsegment (3) von dem Reibmaterialband (24) abzuschneiden und es durch Zusammenwirken mit der Aufnahmerolle (245) zu halten, und
ein Preßelement (253a), das zwischen zwei benachbarten Schneidblättern angeordnet ist, zur Hin- und Herbewegung zwischen einer rückgezogenen Position, in der das Preßelement das Schneiden und Halten des Reibmaterialsegments durch die Schneidblätter (251) erlaubt, und einer ausgefahrenen Position, in der das Preßelement die Reibmaterialsegmente von einer Position zwischen den zwei Schneidblättern herausdrückt, um es gegen die Befestigungsfläche zu pressen.

15. Vorrichtung zur Durchführung des Verfahrens nach Anspruch 1, umfassend:
einen Halter (7), auf dem der Kern anzuordnen ist, dessen Befestigungsfläche mit darauf aufgebrachtem Klebstoff nach oben weist, und der zur intermittierenden Drehung in Vorbereitung zum Ankleben der Reibmaterialsegmente angeordnet ist;
eine Mehrzahl von Abwickelmechanismen (29) zum intermittierenden Abwickeln einer Mehrzahl von Reibmaterialbändern (24) jeweils um einen Betrag, der einem Reibmaterialsegment (3) entspricht, zu einer Mehrzahl von Abwickelpositionen (D₁, D₂), die über dem Halter mit gleichen Abständen in Umfangskonfiguration des Kerns (2) angeordnet sind; und
eine Mehrzahl von anhebbaren Preßmechanismen (38) zum Schneiden der Reibmaterialbänder (24) und Pressen und Kleben der sich ergebenden Reibmaterialsegmente (3) auf den Kern (2).

## Revendications

1. Procédé pour fabriquer une plaque de friction d'embrayage (1), comprenant la liaison d'une pluralité de segments de matière de friction (3) à une partie centrale annulaire (2) dans une conformation circonférentielle, les segments de matière de friction étant liés à la partie centrale en ménageant des espaces (4) entre les segments adjacents qui définissent des rainures de graissage.

2. Procédé selon la revendication 1, comprenant les étapes suivantes :
le positionnement de la partie centrale (2) de sorte que la surface de liaison, qui a un adhésif appliqué à cette dernière, fait face vers le haut ;
le déroulement d'une bande de matière de friction (24) à une certaine position au-dessus de ladite partie centrale d'une quantité correspondant à un segment de matière de friction ;
le découpage de ladite bande de matière de friction (24) pour réaliser ledit segment de matière de friction (3), et le pressage et la fixation par adhésif dudit segment de matière de friction (3) à ladite surface de liaison de ladite partie centrale (2) ; et
le déroulement de ladite bande de matière de friction (24) d'une quantité correspondant à un segment de matière de friction suivant (3), et la rotation de ladite partie centrale (2) en préparation pour l'adhérence dudit segment de matière de friction suivant (3).

3. Procédé selon la revendication 1, comprenant les étapes suivantes :
le positionnement de ladite partie centrale (2) de sorte que ladite surface de liaison, qui a un adhésif appliqué à cette dernière, fait face vers le haut ;
le déroulement d'une bande de matière de friction (124) ayant une largeur correspondant à celle de zones divisées de façon égale sur la circonférence de ladite partie centrale à une position au-dessus de ladite partie centrale, dans une quantité correspondant à une pluralité de segments de matière de friction (3) situés dans une desdites zones ;
la soumission de ladite bande de matière de friction (124) à un poinçonnage multiple pour réaliser une pluralité de segments de matière de friction (3), et le pressage et la fixation par adhésif desdits segments de matière de friction (3) à ladite surface de liaison de ladite partie centrale ; et
le déroulement de ladite bande de matière de friction (124), et la rotation de ladite partie centrale (2) en préparation pour l'adhérence suivante des segments de matière de friction suivants (3).

4. Procédé selon la revendication 1, comprenant les étapes suivantes :
la délivrance d'une bande de matière de friction (24) à une certaine position entre un rouleau de réception (245) et un rouleau de coupe (244) ayant un grand nombre de lames de coupe (251) disposées de façon radiale à des distances égales sur une surface périphérique extérieure du rouleau de coupe,
le découpage et la retenue de chacun des segments de matière de friction (3), de façon séquentielle, à partir de ladite bande de matière de friction (24) par le concours de deux lames de coupe adjacentes du rouleau de coupe (244) et dudit rouleau de réception (245), et
la poussée de chaque segment individuel retenu de matière de friction (3) à partir d'une position entre les lames de coupe et le pressage et la fixation par adhésif du segment de matière de friction sur ladite surface de liaison de ladite partie centrale (2) tout en faisant tourner la partie centrale de façon synchrone avec ledit rouleau de coupe autour d'un axe perpendiculaire à l'axe du rouleau de coupe.

5. Procédé selon la revendication 1, comprenant les étapes suivantes :
le positionnement de ladite partie centrale (2) de sorte que ladite surface de liaison, qui a un adhésif appliqué à cette dernière, fait face vers le haut ;
le déroulement d'une pluralité de bandes de matière de friction (24) chacune d'une quantité correspondant à un des segments de matière de friction (3) au niveau d'une pluralité de positions de déroulement (D₁, D₂) agencées au-dessus de ladite partie centrale (2) à des distances égales dans une direction circonférentielle de ladite partie centrale ;
le découpage de chacune desdites bandes de matière de friction (24) pour réaliser ledit segment de matière de friction (3), et le pressage et la fixation par adhésif dudit segment de matière de friction à ladite surface de liaison de ladite partie centrale (2) ; et
le déroulement de chacune desdites bandes de matière de friction (24) d'une quantité correspondant à un segment de matière de friction suivant (3), et la rotation de ladite partie centrale (2) en préparation pour l'adhérence dudit segment de matière de friction suivant.

6. Procédé selon l'une quelconque des revendications 1 à 5, dans lequel ladite partie centrale annulaire possède des surfaces de liaison sur des côtés opposés de cette dernière, ledit processus comprenant, de plus, les étapes suivantes :
la fourniture de ladite partie centrale annulaire (2) dans une ligne de fabrication de la plaque de friction ;
la mise en oeuvre, dans la ligne de fabrication, de la fixation par adhésif des segments de matière de friction (3) à la plaque par :
l'application de l'adhésif à l'une des surfaces opposées de la partie centrale (2) ;
le pressage et la fixation par adhésif desdits segments de matière de friction (3) à ladite surface de liaison particulière de ladite partie centrale ;
après l'achèvement de la fixation par adhésif des segments de matière de friction (3) à ladite surface de liaison particulière, le renversement de ladite partie centrale annulaire dirigée vers le haut ;
l'application de l'adhésif à l'autre surface de liaison de la partie centrale (2) ;
la fixation par adhésif des segments de matière de friction (3) à ladite autre surface de liaison de la partie centrale d'une manière similaire à celle effectuée pour ladite surface de liaison particulière ; et
le pressage de la totalité de la partie centrale annulaire avec les segments de matière de friction fixés par adhésif à ses surfaces de liaison opposées pour obtenir la plaque de friction ; et
ensuite, l'extraction de la plaque de friction de la ligne de fabrication.

7. Procédé selon la revendication 6, dans lequel ladite ligne de fabrication s'étend sensiblement sur un cercle.

8. Procédé selon l'une ou l'autre des revendications 6 et 7, dans lequel la fourniture de ladite partie centrale annulaire et l'extraction de ladite plaque de friction sont effectuées au niveau d'une position particulière dans ladite ligne de fabrication.

9. Procédé selon la revendication 6, dans lequel ladite ligne de fabrication s'étend sensiblement de façon linéaire.

10. Procédé selon la revendication 9, dans lequel la fourniture de ladite partie centrale annulaire et l'extraction de ladite plaque de friction sont effectuées au niveau d'une position d'extrémité particulière et d'une autre position d'extrémité dans ladite ligne de fabrication linéaire.

11. Procédé selon l'une quelconque des revendications 2 à 10, comprenant, de plus, l'étape d'examen de la plaque de friction obtenue pour voir si lesdits segments de matière de friction sont liés à la partie centrale annulaire de façon fiable et d'une manière souhaitée, avant l'extraction de la plaque de friction de la ligne de fabrication.

12. Appareil pour exécuter le procédé selon la revendication 1, comprenant :
un support (7) sur lequel ladite partie centrale (2) est à positionner avec ladite surface de liaison, qui a un adhésif appliqué à cette dernière, faisant face vers le haut, et qui est agencé pour être tourné de façon intermittente pour la positionner en préparation pour l'adhérence de chaque segment de métal de friction ;
un mécanisme de déroulement (29) pour dérouler, de façon intermittente, une bande de matière de friction à une position au-dessus dudit support d'une quantité correspondant à chacun des segments de matière de friction ; et
un mécanisme de pression pouvant être relevé (38) pour découper et presser ladite bande de matière de friction et pour fixer par adhésif le segment de matière de friction résultant à ladite partie centrale.

13. Appareil pour exécuter le processus selon la revendication 1, comprenant :
un support (7) sur lequel ladite partie centrale est à positionner avec la surface de liaison, qui a un adhésif appliqué à cette dernière, faisant face vers le haut, et qui est agencé pour être tourné de façon intermittente pour la positionner en préparation pour l'adhérence de chaque segment de métal de friction ;
un mécanisme de déroulement (29) pour dérouler, de façon intermittente, une bande de matière de friction à une position au-dessus de ladite partie centrale, ladite bande ayant une largeur correspondant à celle des segments de matière de friction qui sont à situer sur des zones de ladite partie centrale qui sont divisées de façon égale sur la circonférence ; et
un mécanisme de pression pouvant être relevé (138) pour soumettre ladite bande de matière de friction à un poinçonnage multiple pour réaliser une pluralité de segments de matière de friction, et pour presser et pour fixer par adhésif les segments de matière de friction résultants à ladite partie centrale.

14. Appareil pour exécuter le procédé selon la revendication 1, comprenant :
un mécanisme d'alimentation pour délivrer une bande de matière de friction à une certaine position entre un rouleau de coupe (244) et un rouleau de réception (245) qui sont mis en rotation, leurs surfaces périphériques extérieures étant opposées l'une à l'autre,
un support (207) disposé à côté dudit rouleau de coupe (244) pour tourner de façon synchrone avec le rouleau de coupe, pour supporter ladite partie centrale (2), la surface de liaison étant opposée à la surface périphérique extérieure dudit rouleau de coupe, ledit rouleau de coupe incluant une pluralité de lames de coupe (251) disposées de façon radiale à des distances égales sur la surface périphérique extérieure de ce dernier, deux lames de coupe adjacentes des lames de coupe étant capables de découper le segment de matière de friction (3) à partir de la bande de matière de friction (24) et de le retenir avec le concours dudit rouleau de réception (245), et
un élément de pression (253a) disposé entre deux lames de coupe adjacentes pour effectuer un mouvement de va-et-vient entre une position rétractée dans laquelle ledit élément de pression permet le découpage et la retenue dudit segment de matière de friction par les lames de coupe (251) et une position avancée dans laquelle ledit élément de pression pousse ledit segment de matière de friction en dehors d'une position entre les deux lames de coupe pour le presser contre ladite surface de liaison.

15. Appareil pour exécuter le procédé selon la revendication 1, comprenant :
un support (7) sur lequel ladite partie centrale est à positionner avec ladite surface de liaison, qui a un adhésif appliqué à cette dernière, faisant face vers le haut, et qui est agencé pour être tourné de façon intermittente en préparation pour l'adhérence des segments de métal de friction ;
une pluralité de mécanismes de déroulement (29) pour dérouler, de façon intermittente, une pluralité de bandes de matière de friction (24), chacune d'une quantité correspondant à un segment de matière de friction particulier (3) à une pluralité de positions de déroulement (D₁, D₂) agencées au-dessus dudit support à des distances égales dans une conformation circonférentielle de ladite partie centrale (2) ; et
une pluralité de mécanismes de pression pouvant être relevés (38) pour découper lesdites bandes de matière de friction (24), et pour presser et pour fixer par adhésif lesdits segments de matière de friction résultants (3) à ladite partie centrale (2).
